(19) Europäisches Patentamt
European Patent Office
Office européen des brevets

(11) **EP 3 433 577 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **17711681.1**

(22) Anmeldetag: **22.03.2017**

(51) Int Cl.:
**G01B 21/04** *(2006.01)*    **G01B 11/25** *(2006.01)*
**G01N 21/55** *(2014.01)*

(86) Internationale Anmeldenummer:
**PCT/EP2017/056835**

(87) Internationale Veröffentlichungsnummer:
**WO 2017/162744 (28.09.2017 Gazette 2017/39)**

(54) **VORRICHTUNG UND VERFAHREN ZUM VERKNÜPFEN VON MESSSIGNALEN AUS BELEUCHTUNGSSIGNALEN**

DEVICE AND METHOD FOR LINKING MEASUREMENT SIGNALS FROM LIGHTING SIGNALS

DISPOSITIF ET PROCÉDÉ POUR COMBINER DES SIGNAUX DE MESURE À PARTIR DE SIGNAUX D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2016 EP 16161795**

(43) Veröffentlichungstag der Anmeldung:
**30.01.2019 Patentblatt 2019/05**

(73) Patentinhaber: **Fraunhofer-Gesellschaft zur Förderung der angewandten Forschung e.V.
80686 München (DE)**

(72) Erfinder:
• **DÖGE, Jens
01069 Dresden (DE)**
• **HOPPE, Christoph
01127 Dresden (DE)**
• **PRIWITZER, Holger
01809 Dohna (DE)**

(74) Vertreter: **König, Andreas Rudolf et al
Schoppe, Zimmermann, Stöckeler
Zinkler, Schenk & Partner mbB
Patentanwälte
Radlkoferstraße 2
81373 München (DE)**

(56) Entgegenhaltungen:
WO-A1-2015/184308    JP-A- 2005 078 239
US-A- 5 085 502    US-A1- 2001 052 985
US-A1- 2010 310 126    US-A1- 2015 015 898
US-A1- 2015 036 917    US-A1- 2016 010 990
US-B1- 6 765 606

• PATRICK LICHTSTEINER ET AL: "A 128128 120 dB 15 s Latency Asynchronous Temporal Contrast Vision Sensor", IEEE JOURNAL OF SOLID-STATE CIRCUITS, IEEE SERVICE CENTER, PISCATAWAY, NJ, USA, vol. 43, no. 2, 1 February 2008 (2008-02-01), pages 566-576, XP011200748, ISSN: 0018-9200, DOI: 10.1109/JSSC.2007.914337

EP 3 433 577 B1

**Beschreibung**

Die vorliegende Erfindung bezieht sich auf eine Vorrichtung zum Verknüpfen von Messsignalen, so dass eine Position eines Beleuchtungssignals auf einem Oberflächenbereich ableitbar ist und auf ein Verfahren zum Beleuchten eines Oberflächenbereichs. Die vorliegende Erfindung bezieht sich insbesondere auf ein Verfahren und eine Vorrichtung zur 3D-Vermessung von kontrastreichen Oberflächen (hoher Dynamikbereich; high dynamic range - HDR) mittels Laserlichtschnitt-Triangulation (HDR-LL).

Zur Vermessung von Oberflächen kann ein Laserlichtschnitt-Verfahren angewandt werden. Hierbei können Probleme auftreten. Beispielsweise kann in Bezug auf Intensitäten und Reflektanzen eine große Intensität der Laserlichtlinie zu einem Überstrahlen bzw. einer Saturierung in dem verwendeten Bildsensor auf einen Maximalwert führen. Dies kann dazu führen, dass Auswertealgorithmen wie eine Schwerpunktbestimmung (engl.: Center of Gravity - CoG) nicht mehr korrekt funktionieren. Wird ein fester Schwellwert für die Positionsbestimmung verwendet, kann eine große Breite der Laserlichtlinie mit einen konstanten Helligkeitswert festgestellt werden, so dass eine Position der Laserlichtlinie schwer oder ungenau zu bestimmen ist. Eine geringe Intensität der Laserlichtlinie kann dazu führen, dass lediglich ein sehr geringer Pegel erfasst wird, so dass ein starker Einfluss des Rauschens vorherrscht. Dies führt zu einer Unsicherheit der Schwerpunktbestimmung aufgrund des Rauschens. Darüber hinaus kann eine große Dynamik innerhalb des Bildes, beispielsweise von 200:1 und mehr, dazu führen, dass Unterschiede im Bild nicht mehr ausgeglichen werden können und/oder dass Regionen mit geringer und großer Intensität auftreten, was zu oben beschriebenen Schwierigkeiten führen kann.

Wird die Auswertung einer Übertragungsfunktion betrachtet, die als Möglichkeit zur Korrektur des Kontrast-Problems verwendet werden kann, so ist dies in verschiedenen Betriebsarten möglich. Es besteht die Möglichkeit eines linearen Betriebs. Dies bietet den Vorteil, dass mittels CoG ein effizientes Verfahren zur präzisen Bestimmung der Lage einer gaußförmigen Laserlinie zur Verfügung steht. Allerdings führt dies den Nachteil mit sich, dass bei einer Überlagerung von Reflektanzsprung und Laserlinie eine Veränderung des Signalwerts erfolgt, wie es durch folgende Formel darstellbar ist:

$$S = \frac{RE}{K}$$

wobei mit S der Signalwert, mit R die Reflektanz der Oberfläche, mit E eine eingestrahlte Energie ($E_e$) sowie mit K eine Normierungsgröße bezeichnet ist. Diese Veränderung bzw. Stufe im Signalwert führt zu einer Verschiebung des optischen Schwerpunktes und damit zu einem Fehler der Positionsbestimmung der Laserlinie. Ein Überstrahlen in den hellen Bereichen führt ebenfalls dazu, dass die Schwerpunktbestimmung fehlerbehaftet ist oder nicht mehr funktioniert. Eine Unterbelichtung der dunklen Bereiche führt dazu, dass kein Signal mehr sichtbar ist. Der Kontrast verhindert ab einen bestimmten Wert die Aufnahme aller Helligkeitsstufen in einem Bild.

Es besteht ferner die Möglichkeit eines logarithmischen Betriebs, der den Vorteil bietet, dass eine Lösung für das Kontrast-Problem erhalten werden kann. In der Formel

$$S_l = log\left(\frac{RE}{K}\right)$$

ist mit $S_l$ ein logarithmischer Signalwert beschrieben. Diese Auswertung ermöglicht eine Komprimierung des Signals, so dass ein großer Kontrast im Bild nicht mehr zur einer Unterdrückung der dunklen Bereiche führt. Dies ist mit dem Nachteil verbunden, dass CoG aufgrund der nicht-linearen Kennlinie auf dem Bild nicht mehr anwendbar ist, so dass Schwellwertverfahren Anwendung finden. Eine Auswahl geeigneter Schwellen für die Schwellwertverfahren ist aufgrund der Signalvariation durch die Reflektanz jedoch schwierig. Ferner besteht das Risiko des Einschwingens der logarithmischen (Log)-Schaltung.

Ferner besteht die Möglichkeit des multi-linearen Betriebs. Diese bildet den Vorteil, dass eine Lösung für das Kontrast-Problem dadurch erhalten werden kann, dass eine Komprimierung des Signals durchgeführt wird, so dass ein großer Kontrast im Bild nicht mehr zu einer Unterdrückung der dunklen Bereiche führt. Jedoch ist nachteilhaft, dass CoG aufgrund der nicht-linearen Kennlinie auf dem Bild nicht mehr anwendbar ist, so dass ebenso im logarithmischen Betrieb eine Anwendung von Schwellwertverfahren zu erfolgen hat, was die schwierige Auswahl geeigneter Schwellen aufgrund der Signalvariation durch Reflexion mit sich bringt. An den sogenannten Knickpunkten, das heißt Punkte mit Reflektanzsprung, kommt es zu Schwierigkeiten mit der Zuordnung der Signale und somit zu Ungenauigkeiten.

Ferner besteht die Möglichkeit des Multi-Belichtung (multi-exposure) Betriebs. Dieser bietet den Vorteil, dass eine Lösung für das Kontrast-Problem gefunden wird, indem ebenfalls eine Komprimierung des Signals erfolgt, so dass ein großer Kontrast im Bild nicht mehr zu einer Unterdrückung der dunklen Bereiche führt. Nachteilig ist jedoch auch, dass CoG aufgrund der nicht-linearen Kennlinie auf dem Bild nicht mehr anwendbar ist, so dass ebenfalls Schwellwertverfahren verwendet werden, die die schwierige Auswahl geeigneter Schwellen aufgrund der Signalvariation durch Reflektanz mit sich bringen. An den Knickpunkten kommt es ebenfalls zu Schwierigkeiten mit der Zuordnung der Signale und somit zu Ungenauigkeiten. Ferner treten zeitliche Artefakte durch Belichtung zu verschiedenen Zeitpunkten auf.

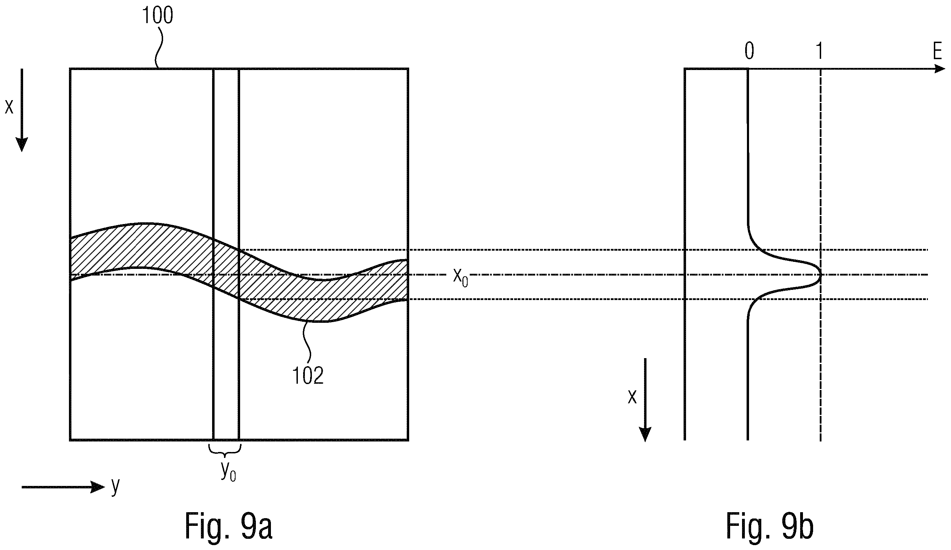

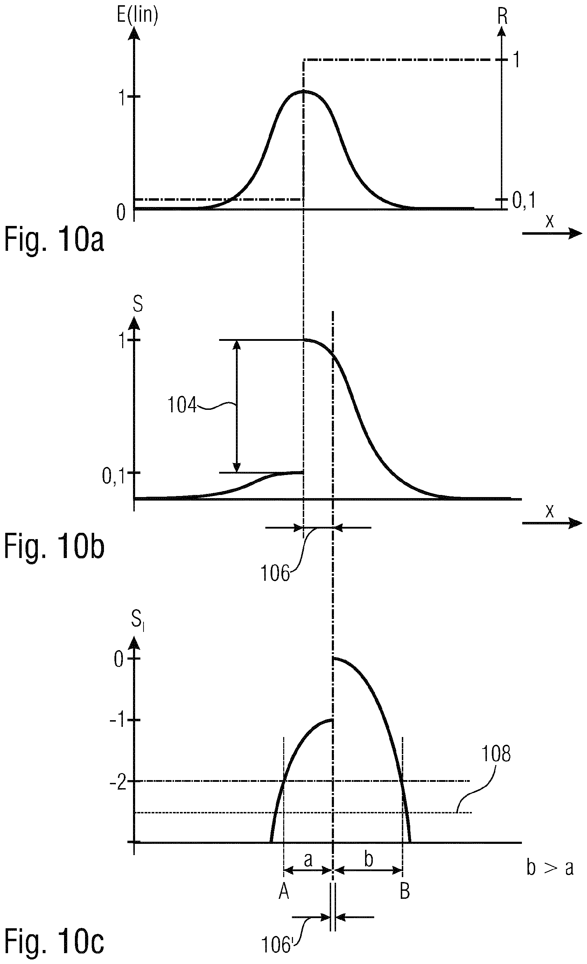

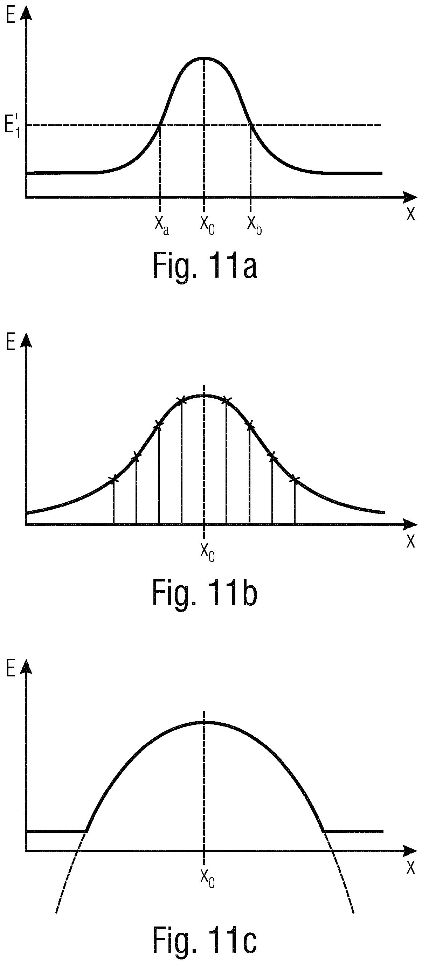

Bekannte Konzepte nutzen ein Auslesen von Helligkeitsinformationen. Zur Beschreibung des Vorgangs zur Bestimmung einer Position $x_0$ des Mittelpunktes des Abbildes einer Laserlinie in Spalte $y_0$ auf einer Sensor-Matrix wird nachfolgend auf die Fig. 9a, 9b und 10a bis 10c Bezug genommen. Bekannte Konzepte werden unter Bezugnahme auf die Fig. 11a bis 11c erläutert. In Fig. 9a ist eine Sensor-Matrix 100 dargestellt, bei der Pixel entlang einer Richtung x in Spalten angeordnet sind, wobei mehrere Spalten entlang einer y-Richtung nebeneinander angeordnet sind. Entlang der x-Richtung sind somit Pixel- bzw. Spaltenpositionen angeordnet, während entlang der y-Richtung Zeilenpositionen angeordnet sind. Auf den Pixeln ist eine Laserlinie 102 dargestellt. Ziel der Auswertung ist es beispielsweise, in einer Spalte $y_0$ eine Position $x_0$ der Laserlinie 102 in der Sensor-Matrix 100 zu bestimmen.

Fig. 9b zeigt ein schematisches Diagramm der Intensitätsverteilung E in der Spalte $y_0$ über die Pixelposition x. Ein Intensitätsminimum ist beispielhaft mit dem Wert 0 und ein Intensitätsmaximum mit dem Wert 1 dargestellt. Die Intensität E kann auch als Amplitude der empfangenen Laserlichtlinie beschrieben werden.

In anderen Worten zeigen die Fig. 9a und 9b eine Darstellung der Ermittlung der Position $x_0$ der Laserlinie 102 in der Spalte $y_0$ auf der Sensor-Matrix 100 eines Bildsensors.

Die Fig. 10a bis 10c zeigen nun beispielhaft verschiedene Auswertemöglichkeiten der Intensitätsverteilung gemäß Fig. 9b. In Fig. 10a ist beispielsweise eine lineare Auswertung der Intensitätsverteilung gemäß Fig. 9b dargestellt. Der Kurvenverlauf entspricht im Wesentlichen dem in Fig. 9b dargestellten. Ferner zeigt das Diagramm der Fig. 10a einen Verlauf einer Reflektanz R an dem vermessenen Objekt über die Pixelposition x.

Fig. 10b zeigt eine schematische Darstellung von Pixelwerten, d. h. Signalwerten S, die am Bildsensor detektierbar sind über die Pixelposition x. Im Bereich des Reflektanzsprungs gemäß Fig. 10a findet eine Intensitätsdämpfung statt, die zu einer Verschiebung 106 des Schwerpunktes, einen sogenannten CoG-Shift führt.

In Fig. 10c ist eine logarithmische Darstellung des Signalwerts $S_l$, gezeigt. Auch bei der logarithmischen Darstellung kommt es zu einer Verschiebung 106', so dass die CoG-Methode nicht anwendbar ist. Durch die logarithmische Darstellung kann eine Anhebung des gedämpften Signals A über einen Rauschschwellwert 108 erfolgen, so dass hier ebenfalls ein Signal detektierbar wird.

In den Fig. 11a, 11b und 11c sind verschiedene Auswertemöglichkeiten dargestellt. Fig. 11a zeigt eine Schwell-wertauswertung bzgl. eines Schwellwertes $E_1$'. Zum Auslesen der Helligkeitsinformationen können nun ein oder zwei Schwellwerte $E_1$' zur Bestimmung einer Position einer steigenden ($x_a$) und/oder fallenden ($x_b$) Flanke ausgewertet werden, um eine Berechnung des Mittelwerts $x_0$ der Position der Laserlichtlinie zu ermöglichen. Dies kann mit bis zu einer Subpixel-Genauigkeit von 0,5 Subpixeln erfolgen, wie es in Fig. 11b angedeutet ist. Dies ist einfach und schnell zu berechnen.

11b zeigt eine Anwendung einer lineare Übertragungsfunktion, das heißt eine Gauß-Kurve, für den CoG-Algorithmus, wie es beispielsweise in den Fig. 9b oder 10a dargestellt ist, um das Maximum zu bestimmen. Es kann eine Subpixel-Genauigkeit von bis zu 1/64 erhalten werden, wobei meist nur bis zu 1/8 bis 1/16 sinnvoll ist. Dies ist jedoch deutlich aufwendiger als die Verwendung der Flanken $x_a$ und/oder $x_b$ und erfordert unter anderem eine Analog/Digital-Wandlung und Auslesen des aufgezeichneten Vollbildes.

Fig. 11c zeigt eine Verwendung einer nicht-linearen Übertragungsfunktion. Eine Realisierung kann mittels feldprogrammierbarem Gatterarray (FPGA) oder PC erfolgen. Im Falle einer nicht-linearen Kennlinie kann ein Curve-Fitting-Algorithmus (Kurvenanpassungsalgorithmus) verwendet werden, bei dem bis zu 1/64 Subpixel-Genauigkeit erhalten werden kann, wobei auch hier meist nur in einem Bereich zwischen 1/8 und 1/16 sinnvoll ist. Diese Variante ist aufwendiger als die Verwendung einer linearen Übertragungsfunktion, erfordert ebenfalls eine Analog/Digital-Wandlung und Auslesen des Vollbildes und kann mittels FPGA oder PC realisiert werden. Die beschriebenen Algorithmen sind entweder ungenau oder sie benötigen das analoge Auslesen der Sensor-Matrix. Die Algorithmen für die lineare Übertragungsfunktion und/oder den Curve-Fitting-Algorithmus sind relativ aufwendig und werden bei hohen Geschwindigkeitsanforderungen zumeist in einem FPGA realisiert.

In anderen Worten zeigen die Fig. 11a bis 11c eine Darstellung der Varianten zur Ermittlung der Position $x_0$ einer Laserlinie entlang einer Spalte.

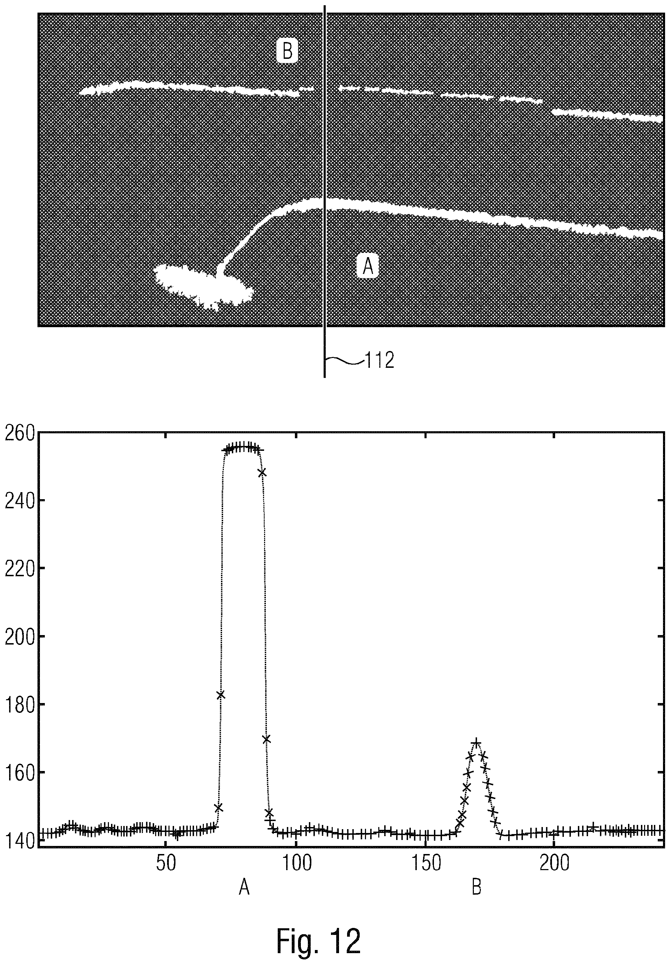

Das grundsätzliche Problem bei der spaltenweisen Suche nach der exakten Position der Laserlinie ist die Beschaffenheit und Reflektanz der Oberfläche. Diese Parameter beeinflussen, wieviel des Laserlichts von der zu vermessenden Oberfläche auf den Bildsensor der Messkamera auftrifft. Je besser die Reflexionseigenschaften bezüglich des von der Messkamera beobachteten Raumwinkels sind, umso mehr Licht ist zu beobachten. Dies ist in Abbildung 12 dargestellt, wobei an der mit A markierten Stelle eine große Reflektanz zu einer großen Helligkeit führt und an einer mit B markierten Stelle eine kleine Reflektanz zu einer kleinen Helligkeit. Für die Bestimmung der Position der Laserlinie wird die Helligkeitsverteilung entlang der in Fig. 12 angegebenen Linie 112 zwischen den Punkten A und B genutzt, die im unteren Bereich der Fig. 12 an der Abszisse dargestellt ist. In anderen Worten zeigt Fig. 12 Laserlinien auf Oberflächen mit unterschiedlichen Reflektanzen im oberen Bereich und einen Schnitt durch beide Linien im unteren Bereich. Die Reflektanz an der Stelle A ist vergleichsweise groß und an der Stelle B vergleichsweise klein.

In den Fig. 10a bis 10c ist die grundsätzliche Problematik dargestellt. Bei einem Sprung der Reflektanz der untersuchten Oberfläche variiert auch das Signal der Laserlinie, so dass sich bei einer Auswertung mittels CoG oder Schwellwertverfahren die Position des Maximums verschiebt. In anderen Worten zeigen die Fig. 10a bis 10c einen Verlauf der Helligkeit bei einem Reflektanzsprung, wobei Fig. 10a die Amplitude der Laserlinie über die Pixelposition x zeigt, während Fig. 10b einen Wert in einem Pixel darstellt, der linear skaliert ist, und Fig. 10c diesen Wert in einem logarithmischen Verhältnis darstellt.

Aus dem Dokument US2015/015898 A1 ist ein Verfahren und eine Vorrichtung zur drei-dimensionalen optischen Vermessung von Gegenständen mittels eines Lichtlinienscanners bekannt. Der Scanner projiziert eine erste Lichtlinie mit einer ersten Intensität zu einer ersten Zeit und eine zweite Lichtlinie mit einer zweiten Intensität zu einer zweiten Zeit.

Das Dokument WO2015/184308 A1 beschreibt ein Verfahren und eine Vorrichtung zur drei-dimensionalen optischen Vermessung von Gegenständen mittels eines Bewegungskontrastsensors. Es wird ebenfalls die Reflektivität des Gegenstandes bestimmt.

Wünschenswert

wären demnach Vorrichtungen und Verfahren, die eine Bestimmung einer Position eines Beleuchtungssignals auf einem Oberflächenbereich mit einer hohen Präzision ermöglichen.

Die Aufgabe der vorliegenden Erfindung besteht deshalb darin, eine Vorrichtung und ein Verfahren zu schaffen, die eine Bestimmung einer Position eines Beleuchtungssignals auf einem Oberflächenbereich mit einer hohen Präzision ermöglichen.

Diese Aufgabe wird durch den Gegenstand der unabhängigen Patentansprüche gelöst.

Der Kerngedanke der vorliegenden Erfindung besteht darin, erkannt zu haben, dass obige Aufgabe dadurch gelöst werden kann, dass durch zweifaches Beleuchten der Oberfläche ein Einfluss der Reflektanz reduzierbar ist, indem ein erstes Messsignal, das auf einer ersten Beleuchtung basiert und ein zweites Messsignal, das auf einer zweiten Beleuchtung basiert, miteinander verknüpft werden. Durch die Verknüpfung kann der Einfluss der auf beide Messsignale wirkenden Reflektanz zumindest teilweise reduziert oder kompensiert werden.

Gemäß einem Ausführungsbeispiel umfasst eine Vorrichtung eine Beleuchtungseinrichtung, die ausgebildet ist, um ein erstes Beleuchtungssignal mit einer ersten Beleuchtungsintensität und ein zweites Beleuchtungssignal mit einer zweiten Beleuchtungsintensität in Richtung eines Oberflächenbereichs eines zu vermessenden Objekts auszusenden, wobei die zweite Beleuchtungsintensität geringer ist als die erste Beleuchtungsintensität. Die Vorrichtung umfasst eine Erfassungseinrichtung, die ausgebildet ist, um ein erstes Messsignal basierend auf einer ersten Reflexion des ersten Beleuchtungssignals auf dem Oberflächenbereich bereitzustellen und um ein zweites Messsignal basierend auf einer zweiten Reflexion des zweiten Beleuchtungssignals auf dem Oberflächenbereich bereitzustellen. Die Vorrichtung umfasst eine Auswerteeinrichtung, die ausgebildet ist, um das erste Messsignal und das zweite Messsignal miteinander zu verknüpfen, um ein Verknüpfungsergebnis zu erhalten, aus dem eine Position des ersten Beleuchtungssignals auf dem Oberflächenbereich ableitbar ist, wobei ein Einfluss einer Reflektanz des Oberflächenbereichs in dem Verknüpfungsergebnis verglichen mit dem Einfluss auf das erste und zweite Messsignal reduziert ist. Vorteilhaft ist, dass die Reflektanz an einem Ort des Oberflächenbereichs auf die Reflexion des ersten Beleuchtungssignals und auf die Reflexion des zweiten Beleuchtungssignals vergleichbar oder gleich einwirkt, so dass durch die Verknüpfung der beiden erhaltenen Messsignale dieser Einfluss zumindest teilweise reduzierbar oder kompensierbar ist.

Gemäß einem Ausführungsbeispiel ist die Auswerteeinrichtung konfiguriert, um basierend auf dem ersten Messsignal einen ersten logarithmierten Wert zu bilden und basierend auf dem zweiten Messsignal einen zweiten logarithmierten Wert zu bilden, wobei in dem ersten logarithmierten Wert und in dem zweiten logarithmierten Wert der Einfluss der Reflektanz ein Summand ist, so dass durch Subtraktion des zweiten logarithmierten Werts von dem ersten logarithmierten Wert, um das Verknüpfungsergebnis zu erhalten, der Einfluss der Reflektanz reduziert ist. Vorteilhaft daran ist, dass die Logarithmierung der Messsignale zu einem additiven Einfluss der Reflektanz führt, so dass die beiden Summanden der Reflektanz im ersten und zweiten Messsignal voneinander subtrahiert werden können, was einen geringen Aufwand bezüglich der Rechenoperationen bedeutet.

Gemäß einem Ausführungsbeispiel ist die Auswerteeinrichtung konfiguriert, um basierend auf dem Verknüpfungsergebnis eine Position des ersten Beleuchtungssignals und/oder des zweiten Beleuchtungssignals auf dem Oberflächenbereich zu bestimmen. Dies kann durch eine Schwerpunktbestimmung erfolgen, die durch den reduzierten Einfluss der Reflektanz mit hoher Präzision ausführbar ist.

Gemäß einem weiteren Ausführungsbeispiel umfasst die Beleuchtungseinrichtung einen Linienprojektor, der ausgebildet ist, um das erste Beleuchtungssignal und das zweite Beleuchtungssignal auszusenden. Alternativ umfasst die Beleuchtungseinrichtung einen Linienprojektor, der ausgebildet ist, um das erste Beleuchtungssignal auszusenden, und umfasst ferner eine Lichtquelle, die ausgebildet ist, um den Oberflächenbereich in einem Beleuchtungsbereich im Wesentlichen homogen zu beleuchten, wobei der Beleuchtungsbereich so angeordnet ist, dass das erste Beleuchtungssignal zumindest bereichsweise mit dem Beleuchtungsbereich überlappt. Das erste Beleuchtungssignal kann eine Linie sein, während das zweite Beleuchtungssignal eine homogene Beleuchtung und/oder eine Linie umfassen kann. In beiden Fällen ist eine Betrachtung der Reflektanz am Ort des ersten Beleuchtungssignals möglich, wobei im ersten Fall eine Verwendung eines Snapshot (Schnappschuss)-Modus des Bildsensors ermöglicht ist, während im zweiten Fall eine einfache Beleuchtung des Objektbereichs möglich ist.

Gemäß einem weiteren Ausführungsbeispiel ist in einem ersten Messintervall die Beleuchtungseinrichtung ausgebildet, um das erste Beleuchtungssignal auszusenden und die Erfassungseinrichtung ausgebildet, um eine erste Aufnahme des Oberflächenbereichs zu erfassen. In einem zweiten Messintervall ist die Beleuchtungseinrichtung ausgebildet, um das zweite Beleuchtungssignal auszusenden und die Erfassungseinrichtung ist ausgebildet, um eine zweite Aufnahme des Oberflächenbereichs zu erfassen. Die Vorrichtung ist ausgebildet, um zwischen dem ersten Messintervall und dem zweiten Messintervall eine im Wesentlichen unveränderte Relativposition zwischen der Beleuchtungseinrichtung, der Erfassungseinrichtung und dem Oberflächenbereich zu erhalten. Dies ermöglicht, die erste Aufnahme und die zweite Aufnahme in unterschiedlichen Speicherzellen eines Pixels oder in unterschiedlichen Pixeln eines Bildsensors der Erfassungseinrichtung vorzunehmen. Durch die im Wesentlichen unveränderte Relativposition kann eine geringe Beeinflussung der Positionsbestimmung durch eine Relativbewegung erhalten werden, was vorteilhaft ist.

Gemäß einem Ausführungsbeispiel ist die Auswerteeinrichtung so ausgestaltet, dass sie ein Filter aufweist, das ausgebildet ist, um das erste Messsignal und das zweite Messsignal einer Filteroperation zu unterziehen oder, um das Verknüpfungsergebnis einer Filteroperation zu unterziehen. Durch die Filterung der Messsignale und/oder des Verknüpfungsergebnisses kann die Position mit einer hohen Genauigkeit bestimmt werden.

Gemäß einem Ausführungsbeispiel umfasst das erste Beleuchtungssignal ein Linienmuster, das sich entlang einer Zeilenrichtung auf dem Oberflächenbereich erstreckt. Die Auswerteeinrichtung ist ausgebildet, um die Position der Reflexion auf dem Oberflächenbereich entlang einer Spaltenrichtung, die senkrecht zu der Zeilenrichtung angeordnet ist, für eine Vielzahl von lateral versetzten Spalten zu erfassen. Die Auswerteeinrichtung weist eine Mehrzahl von Filterkernen auf, die ausgebildet sind, um das erste Messsignal und das zweite Messsignal einer Filteroperation zu unterziehen und/oder, um das Verknüpfungsergebnis einer Filteroperation zu unterziehen. Die Filterkerne sind lateral versetzt zueinander entlang der Spaltenrichtung angeordnet. Dies ermöglicht eine schnelle Verarbeitung der Messsignale.

Gemäß einem Ausführungsbeispiel sind die Filterkerne mit einem Versatz zueinander angeordnet, der geringer ist als ein Abstand zweier benachbarter Spalten. Dies ermöglicht die Positionsbestimmung mit einer Auflösung, die geringer ist als die Abmessung eines Pixels, das bedeutet, eine Subpixel-Auflösung.

Ein weiteres Ausführungsbeispiel schafft ein Verfahren. Das Verfahren umfasst ein Aussenden eines ersten Beleuchtungssignals mit einer ersten Beleuchtungsintensität und eines zweiten Beleuchtungssignals mit einer zweiten Beleuchtungsintensität in Richtung eines Oberflächenbereichs eines zu vermessenden Objekts, so dass die zweite Beleuchtungsintensität geringer ist als die erste Beleuchtungsintensität. Das Verfahren umfasst ein Bereitstellen eines ersten Messsignals basierend auf einer ersten Reflexion des ersten Beleuchtungssignals auf dem Oberflächenbereich und Bereitstellen eines zweiten Messsignals basierend auf einer zweiten Reflexion eines zweiten Beleuchtungssignals auf dem Oberflächenbereich. Das Verfahren umfasst ein Auswerten des ersten Messsignals und des zweiten Messsignals durch eine Verknüpfung derselben miteinander, um ein Verknüpfungsergebnis zu erhalten, aus dem eine Position des ersten Beleuchtungssignals auf dem Oberflächenbereich ableitbar ist, so dass ein Einfluss einer Reflektanz des Oberflächenbereichs in dem Verknüpfungsergebnis verglichen mit dem Einfluss auf das erste und zweite Messsignal reduziert ist.

Weitere Ausführungsbeispiele schaffen ein Computerprogramm mit einem Programmcode zur Durchführung von hierin beschriebenen Verfahren.

Weitere vorteilhafte Ausführungsformen sind der Gegenstand weiterer abhängiger Patentansprüche.

Bevorzugte Ausführungsbeispiele der vorliegenden Erfindung werden nachfolgend Bezug nehmend auf die beiliegenden Zeichnungen erläutert. Es zeigen:

Fig. 1             eine schematische perspektivische Ansicht einer Vorrichtung gemäß einem Ausführungsbeispiel;

Fig. 2             ein schematisches Diagramm einer Intensitätsverteilung eines reflektierten Beleuchtungssignals gemäß einem Ausführungsbeispiel;

Fig. 3a            ein schematisches Diagramm eines symmetrischen Faltungskerns, der einen sogenannten Mexikaner-Hut implementiert, gemäß einem Ausführungsbeispiel;

Fig. 3b            eine schematische Darstellung eines mit dem Faltungskern aus Fig. 3a gefalteten Signals gemäß einem Ausführungsbeispiel;

| Fig. 3c | eine schematische Darstellung des Faltungsergebnisses der beiden gefalteten Signale aus Fig. 3b gemäß einem Ausführungsbeispiel; |
| Fig. 4 | eine schematische Darstellung eines Filters, das abstandsweise lediglich positive oder lediglich negative Werte aufweist, gemäß einem Ausführungsbeispiel; |
| Fig. 5a | eine schematische Darstellung eines Filters, das positive Abschnitte und negative Abschnitte aufweist, gemäß einem Ausführungsbeispiel; |
| Fig. 5b | die Operanden einer Faltungsoperation umfassend ein Messsignal aus Fig. 1 und das Filter gemäß Fig. 5a gemäß einem Ausführungsbeispiel; |
| Fig. 5c | eine schematische Darstellung des Faltungsergebnisses der Faltung aus Fig. 5b gemäß einem Ausführungsbeispiel; |
| Fig. 6 | eine schematische Darstellung einer Filterkennlinie mit vier Nebenmaxima gemäß einem Ausführungsbeispiel; |
| Fig. 7 | eine schematische Darstellung einer subpixelgenauen Verschiebung eines Filterkerns durch die Ansteuerung mittels zweier Filterkerne folgen gemäß einem Ausführungsbeispiel; |
| Fig. 8a | eine schematische perspektivische Ansicht einer Vorrichtung gemäß einem Ausführungsbeispiel, bei der das zu vermessende Objekt auf einem Träger mit optionalen Positionsmarken angeordnet ist, |
| Fig. 8b | eine schematische Aufsicht auf eine Vorrichtung gemäß einem weiteren Ausführungsbeispiel, die zusätzlich optionale Informationsquellen zur Wiedergabe von Parametern und/oder Identifikationen des Messobjekts aufweist; |
| Fig. 9a und 9b | eine Darstellung der Ermittlung einer Position einer Laserlinie auf einer Sensor-Matrix eines Bildsensors; |
| Fig. 10a bis 10c | verschiedene Auswertemöglichkeiten einer Intensitätsverteilung aus Fig. 9b; |
| Fig. 11a bis 11c | weitere Auswertemöglichkeiten von Intensitätsverteilungen; und |
| Fig. 12 | eine schematische Gegenüberstellung von verschiedenen Reflektanzen auf einer Oberfläche gemäß dem Stand der Technik. |

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

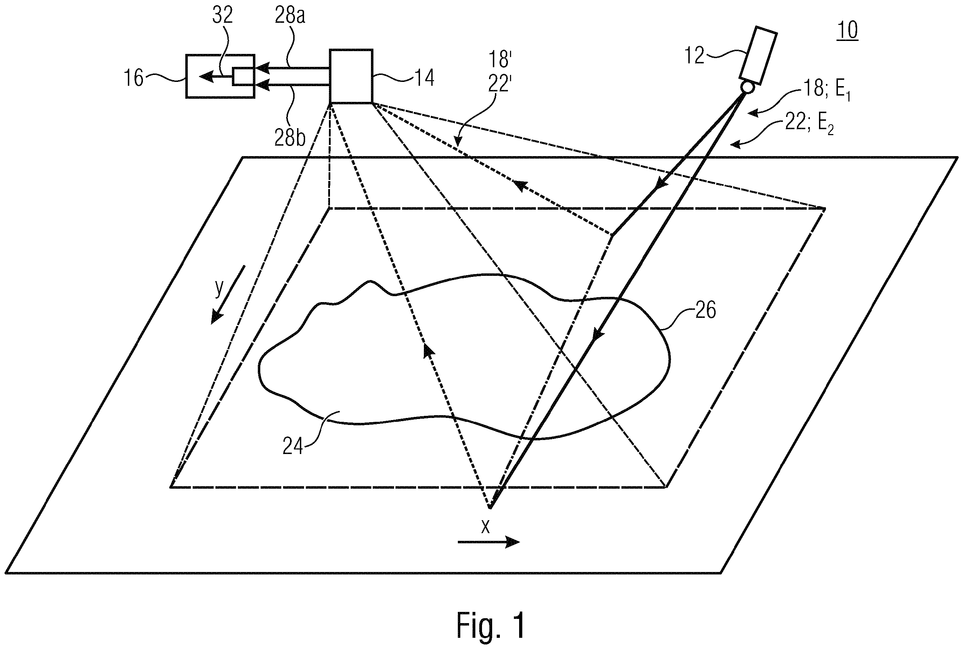

Fig. 1 zeigt eine schematische perspektivische Ansicht einer Vorrichtung 10 gemäß einem Ausführungsbeispiel. Die Vorrichtung 10 umfasst eine Beleuchtungseinrichtung 12, eine Erfassungseinrichtung 14 und eine Auswerteeinrichtung 16.

Die Beleuchtungseinrichtung 12 ist ausgebildet, um ein erstes Beleuchtungssignal 18 mit einer ersten Beleuchtungsintensität oder Beleuchtungsintensitätsverteilung $E_1$ in Richtung eines Oberflächenbereichs 24 eines zu vermessenden Objekts 26 auszusenden. Die Beleuchtungseinrichtung 12 ist ferner ausgebildet, um ein zweites Beleuchtungssignal 22 mit einer zweiten Beleuchtungsintensität oder Beleuchtungsintensitätsverteilung $E_2$ in Richtung des Oberflächenbereichs 24 auszusenden. Die zweite Beleuchtungsintensität $E_2$ ist geringer als die erste Beleuchtungsintensität $E_1$, das heißt, die Beleuchtungsintensitätsverteilung $E_2$ weist an jedem messungsrelevanten Ort eine geringeren Betrag auf als $E_1$ und es gilt:

$$E_1 > E_2, \text{ bzw. } E_1(x_0, y_0) > E_2(x_0, y_0)$$

mit $x_0$ und $y_0$ als zu bestimmendem Ort der Beleuchtung.

Es kann eine beliebige Reihenfolge der Beleuchtungssignale verwendet werden, als $E_2$ und danach $E_1$, $E_1$ und danach $E_2$ oder aber auch eine gleichzeitige oder zeitlich überlappende Aussendung. Das bedeutet, dass die Beleuchtungseinrichtung 12 ausgebildet sein kann, um das Beleuchtungssignal 22 zeitweise nicht auszusenden, wenn das Beleuchtungssignal 18 ausgesendet wird. Alternativ kann die Beleuchtungseinrichtung 12 ausgebildet sein, um eine Hintergrundbeleuchtung, etwa das Beleuchtungssignal 22 auszusenden, und zeitweise ein Beleuchtungssignal mit einer höheren Intensität, etwa das Beleuchtungssignal 18 auszusenden, um die Aufnahmen einmal basierend auf der Hintergrundbeleuchtung und einmal basierend auf der Lichtlinie, die die Hintergrundbeleuchtung überstrahlt, zu erfassen. Die Hintergrundbeleuchtung kann eine Lichtlinie sein, kann aber genauso eine flächige Beleuchtung sein. Die Lichtlinie kann mit einem Linienprojektor ausgesendet werden, bspw. einem LED-Linienprojektor und/oder einem Laserlinienprojektor, so dass es sich bei dem Linienmuster um eine durch zumindest eine LED und/oder einen Laser erzeugte Linie handeln kann. Das bedeutet, dass die Beleuchtungseinrichtung 12 einen Laserlinienprojektor umfassen kann, der ausgebildet ist, um ein Beleuchtungssignal, etwa das Beleuchtungssignal 18, auszusenden. Die Beleuchtungseinrichtung 12 kann ferner eine Lichtquelle aufweisen, die ausgebildet ist, um den Oberflächenbereich 24 zumindest teilweise und in einem Beleuchtungsbereich im Wesentlichen homogen zu beleuchten. Der Beleuchtungsbereich kann so angeordnet sein, dass das Beleuchtungssignal des Laserlinienprojektors zumindest bereichsweise mit dem Beleuchtungsbereich überlappt. Beispielsweise kann der Beleuchtungsbereich zumindest teilweise mit dem Objektbereich 24 überlappen, kann jedoch auch den Objektbereich 24 vollständig ausfüllen oder darüber hinausragen. Eine Beleuchtungsintensitätsverteilung ist bevorzugt vergleichsweise geringer als die andere Beleuchtungsintensitätsverteilung. Wird eine flächige oder homogene Beleuchtungsintensitätsverteilung in Kombination mit einem Linienmuster genutzt, so weist das Linienmuster die vergleichsweise größere oder stärkere Beleuchtungsintensitätsverteilung als das Flächenlicht auf.

Die Beleuchtungseinrichtung 12 ist gemäß einer Ausführungsform ausgebildet, um eine homogene Beleuchtung auszusenden, die die Beleuchtungsintensitätsverteilung $E_2$ bereitstellt, das bedeutet, $E_2(x,y)$ = konstant für alle x und y im Messbereich. Diese homogene Beleuchtung kann zeitweise aktiviert und deaktiviert werden oder kann konstant ausgesendet werden. Bei einer zeitweisen Aktivierung und Deaktivierung kann der Vergleichswert für die Reflektanz basierend auf der homogenen Beleuchtung aufgenommen werden, indem die Oberfläche großflächig homogen beleuchtet wird. Abwechselnd können die Laserlinie, etwa das Beleuchtungssignal 18 und die flächige Beleuchtung, etwa das Beleuchtungssignal 22 aktiviert werden. Die Differenz aus beiden aufgenommenen Bildern kann wie vorangehend für die Laserlinien aus demselben Generator mit zwei verschiedenen Pegeln beschrieben ermittelt werden. Wird eine konstante homogene Beleuchtung verwendet, kann auf eine Deaktivierung der flächigen Beleuchtung verzichtet werden. Dies vereinfacht zwar die Ansteuerung, erfordert aber die Wahl einer geeigneten Beleuchtungsstärke oder Bestrahlungsstärke, die in jedem Ort der Laserlichtlinie deutlich geringer zu sein hat als die Laserlinie. Beispielsweise kann die homogene Beleuchtung höchstens 80 %, höchstens 50 % oder höchstens 20 % der Intensität der Laserlichtlinie betragen.

Von dem Oberflächenbereich 24 zurückgeworfene Reflexionen 18' und 22' der Beleuchtungssignale 18 und 22 können von der Erfassungseinrichtung 14 erfasst werden. Hierfür kann die Erfassungseinrichtung 14 beispielsweise ausgebildet sein, um ein flächiges Bild oder Abbild des Oberflächenbereichs 24 oder eine verarbeitete Version eines solchen Bildes bereitzustellen. Die Erfassungseinrichtung 14 kann beispielsweise eine Flächenkamera und/oder eine Lichtschnittkamera sein oder diese umfassen. Alternativ ist es möglich, dass lediglich eine Information darüber bereitgestellt wird, an welchen Positionen des Oberflächenbereichs 24 eine verglichen mit anderen Bereichen höhere Beleuchtungsintensität erfasst wurde. Hierfür ist die Erfassungseinrichtung 14 bspw. ausgebildet, um Messsignale 28a und 28b bereitzustellen, die auf den Reflexionen 18' und 22' basieren. Das Messsignal 28a kann auf der Reflexion 18' basieren, während das Messsignal 28b auf der Reflexion 22' basieren kann. Das bedeutet, dass das Messsignal 28a der Reflexion 18' und/oder dem Beleuchtungssignal 18 zugeordnet werden kann und dass das Messsignal 28b der Reflexion 22' und/oder dem Beleuchtungssignal 22 zugeordnet werden kann.

Die Auswerteeinrichtung 16 ist ausgebildet, um die Messsignale 28a und 28b zu empfangen. Die Auswerteeinrichtung 16 ist ferner konfiguriert, um die Messsignale 28a und 28b miteinander zu verknüpfen. Die Auswerteeinrichtung 16 ist konfiguriert, um durch die Verknüpfung ein Verknüpfungsergebnis 32 zu erhalten, aus dem eine Position des Beleuchtungssignals 18 und/oder des Beleuchtungssignals 22 auf dem Oberflächenbereich 24 ableitbar ist. Ein Einfluss einer Reflektanz des Oberflächenbereichs 24 ist in dem Verknüpfungsergebnis 32 verglichen mit dem Einfluss auf die Messsignale 18 und 22 bzw. auf die Reflexionen hiervon reduziert. Die Auswerteeinrichtung 16 kann beispielsweise als feldprogrammierbares Gatterarray (FPGA), als Mikrocontroller, als CPU oder als andere programmierbare Hardwareeinheit ausgeführt sein. Die Erfassungseinrichtung 14 und die Auswerteeinrichtung 16 können von einander verschiedene Einrichtungen sein, können aber auch durch einen gemeinsamen Schaltkreis oder eine gemeinsame Logik gebildet sein. Wie es anhand der Fig. 9a und 9b beschrieben ist, kann die Auswerteeinrichtung 16 ausgebildet sein, um basierend auf dem als Linienmuster ausgesendeten Beleuchtungssignal 18, das entlang einer Zeilenrichtung y auf den Bildsensor abgebildet wird, die Position der Reflexion des Beleuchtungssignals 18 auf dem Oberflächenbereich 24 entlang der Spaltenrichtung x für eine Vielzahl von lateral versetzten Spalten zu bestimmen. Jede der bestimmten Positionen entlang der Richtung y kann einer Pixelposition auf einem Bild, das von der Bilderfassungsvorrichtung 14 erfasst wird, zugeordnet sein.

Es wurde erkannt, dass beide Reflexionen 18' und 22' bezogen auf die gleiche Position im Oberflächenbereich 24 vergleichbar oder gleich beeinflusst von der Reflektanz sind. Das bedeutet, dass beispielsweise bei einem gleichen Wellenlängenbereich der Signale 18 und 22 an einem gleichen Punkt in dem Oberflächenbereich 24 beide Signale 18 und 22 gleichermaßen von der Reflektanz oder Reflektivität des Oberflächenbereichs 24 beeinflusst sind. Dies kann als Abweichung oder Fehler in den Reflexionen 18' und 22' verstanden werden. Durch eine Verknüpfung der auf den Reflexionen 18' und 22' aufbauenden Messsignalen 28a und 28b in dem Verknüpfungsergebnis 32 kann dieser gleiche oder vergleichbare Einfluss der Reflektanz zumindest teilweise kompensiert werden, so dass das Verknüpfungsergebnis 32 eine geringe oder keine Störung durch die Reflektanz aufweist, so dass die Bestimmung der Position des Beleuchtungssignals 18 und/oder 22 in dem Oberflächenbereich 24 mit geringen Fehlern und somit einer hohen Präzision möglich ist.

Wird obige Formel

$$S_l = log\left(\frac{RE}{K}\right)$$

betrachtet, so wurde erkannt, dass sich dieses Ergebnis auch darstellen lässt, als

$$S_l = log\left(\frac{RE}{K}\right) = log\left(\frac{E}{K}\right) + log(R)$$

in welchem der Einfluss der Reflektanz R als konstanter Offset betrachtet werden kann. Dieser ist in geringem Maße oder nicht abhängig von der verwendeten Intensität E und kann deshalb bei Verwendung mehrerer Beleuchtungen herausgerechnet werden.

Besonders vorteilhafte Ausgestaltungen der Verknüpfung der Messsignale 28a und 28b werden nachfolgend erläutert. Die Auswerteeinrichtung 16 kann ausgebildet sein, um jeweils einen logarithmierten Wert auf den Messsignalen 28a und 28b abzuleiten. Ein logarithmierter Wert, der aus dem Messsignal 28a von der Auswerteeinrichtung 16 erhalten wird, kann beispielsweise durch

$$S_{l,1} = log\left(\frac{E_1}{K}\right) + log(R)$$

dargestellt werden, während ein aus dem Messsignal 28b abgeleiteter logarithmierter Wert als

$$S_{l,2} = log\left(\frac{E_2}{K}\right) + log(R)$$

darstellbar ist.

Es hat sich herausgestellt, dass der fehlerinduzierende Term log (R) für beide Beleuchtungssignale gleich sein kann. Es ist möglich, jedoch nicht erforderlich, dass die Auswerteeinrichtung 16 die Einzelkomponenten der logarithmierten Werte $S_{l,1}$ und $S_{l,2}$ berechnet. Es ist möglich, dass die Auswerteeinrichtung 16 einen Logarithmus mit der Basis 2, 5, 10 oder einem beliebigen anderen Wert auf die erhaltenen Messwerte anwendet. Eine Subtraktion der Werte ermöglicht die Neutralisierung der Reflektanz auch ohne Aufschlüsselung der Einzelterme.

Die Auswerteeinrichtung 16 kann ausgebildet sein, um die logarithmierten Werte $S_{l,1}$ und $S_{l,2}$ voneinander zu subtrahieren, um die Verknüpfung durchzuführen, etwa gemäß folgender Vorgehensweise:

$$S_1 - S_{l,2} = log\left(\frac{E_1}{K}\right) - log\left(\frac{E_2}{K}\right) + log(R) - log(R).$$

Das bedeutet, in dem erhaltenen Differenzwert kann der Einfluss der Reflektanz kompensiert sein. Der Einfluss der Reflektanz R kann durch diese Subtraktion zumindest mathematisch vollständig kompensiert werden, so dass der tatsächliche Einfluss der Reflektanz R bis hin zu Messungenauigkeiten und/oder Berechnungsungenauigkeiten kompensierbar sein kann.

Durch Umgestaltung der logarithmischen Terme kann das Verknüpfungsergebnis 32 in einer als $S_{l,ges}$ bezeichneten Größe

$$S_{l,ges} = log\left(\frac{E_1}{E_2}\right)$$

erhalten werden.

Das bedeutet, die Auswerteeinrichtung kann ausgebildet sein, um basierend auf dem Messsignal 28a den logarithmierten Wert $S_{l,1}$ zu bilden und um basierend auf dem Messsignal 28b den logarithmierten Wert $S_{l,2}$ zu bilden. In dem logarithmierten Wert $S_{l,1}$ und in dem zweiten logarithmierten Wert $S_{l,2}$ ist der Einfluss der Reflektanz ein Summand. Durch das Subtrahieren des zweiten logarithmierten Werts $S_{l,2}$ von dem logarithmierten Wert $S_{l,1}$ zum Erhalten des Verknüpfungsergebnisses 32, etwa den Wert $S_{l,ges}$ kann der Einfluss der Reflektanz reduziert oder kompensiert werden. Obwohl die logarithmierten Werte $S_{l,1}$ und $S_{l,2}$ so beschrieben sind, dass sie die Reflektanz $E_1$ und $E_2$ mit dem Größenverhältnis $E_1 > E_2$ aufweisen, können Intensitätsgrößenverhältnisse auch vertauscht sein, so dass gilt, $E_2 > E_1$. Dadurch, dass die logarithmierten Werte der Reflektanz, das bedeutet, der Term log (R), in beiden Termen unverändert sind, ändert dies nichts an der Kompensation der Reflektanz.

Obwohl die Auswerteeinrichtung 16 ausgebildet sein kann, um die Messsignale 28a und 28b anders miteinander zu verknüpfen, beispielsweise durch eine Division und/oder beliebige andere mathematische Operationen bezogen auf die Messsignale 28a und 28b, bietet die Logarithmierung Vorteile, da eine Subtraktion der logarithmierten Werte mit geringem Berechnungsaufwand und verglichen mit Multiplikationen oder Divisionen geringem Hardware-Aufwand umsetzbar ist.

In anderen Worten spielt in dem Verknüpfungsergebnis 32 die Reflektanz R keine Rolle. Das Verknüpfungsergebnis 32 kann von der Auswerteeinrichtung 16 zur Bestimmung der Position des Beleuchtungssignals 18 und/oder 22 auf dem Oberflächenbereich 24 verwendet werden und/oder einer anderen Vorrichtung für eine derartige Auswertung zur Verfügung gestellt werden. Zur Kompensation der Reflektanz kann die Oberfläche im beobachteten Flächenelement, dem Oberflächenbereich 24 mit zwei unterschiedlichen Intensitäten der Bestrahlungsstärke, einer größeren, etwa $E_1$, und einer kleineren $E_2$ beleuchtet werden. Eine Subtraktion der resultierenden Signalwerte für die logarithmische Antwort kann bei ansonsten gleichem Proportionalitätsfaktor das oben beschriebene Ergebnis liefern. Es kann davon ausgegangen werden, dass das Verhältnis $E_1/E_2$ an beleuchteten Stellen größer als der Wert 1 ist und die logarithmische Differenz $S_{l,gas}$ signifikant größer ist als bei unbeleuchteten Stellen des Oberflächenbereichs 24. Für die Wahl der Verteilungen der Werte der beiden Intensitäten $E_1$ und $E_2$ können verschiedene Auslegungen implementiert werden, die später detailliert erörtert werden.

Die Normierungsgröße K kann Korrekturwerte der verwendeten Hardware oder dergleichen ausdrücken und kann für beide Beleuchtungssignale und reflektierte Anteile identisch sein. Sollten die Normierungsgrößen K in beiden Signalanteilen unterschiedlich sein, kann dies durch entsprechende Korrekturfaktoren berücksichtigt werden.

Aus dem Verknüpfungsergebnis 32 ist die Position des Beleuchtungssignals 18 und/oder 22 auf dem Oberflächenbereich 24 ableitbar, etwa indem ein Sprung des Werteverlaufs bestimmt wird. Hierfür kann das Verknüpfungsergebnis 32 verwendet werden. Das bedeutet, anstelle einer Auswertung anhand eines einzelnen Messsignals kann eine gleiche oder vergleichbare Auswertung an dem Verknüpfungsergebnis ausgeführt werden. Für das Erhalten geeigneter reflektierter Beleuchtungen ist es ausreichend, dass die beiden Intensitäten $E_1$ und $E_2$ in dem Bereich, in dem die Position festgestellt werden soll, vorhanden sind. Dies kann zeitgleich oder zeitlich versetzt zueinander erfolgen. Soll beispielsweise die Position des Beleuchtungssignals 18 ermittelt werden, so ist es ausreichend, dass das zweite Beleuchtungssignal an diesem Ort ebenfalls reflektiert wird. Auf eine Positionsbestimmung bezüglich des zweiten Beleuchtungssignals kann verzichtet werden. Hierfür kann eine flächige Beleuchtung, etwa eine Hintergrundbeleuchtung, verwendet werden und/oder eine andere Art von Beleuchtung. Handelt es sich bei dem einen, festzustellenden Beleuchtungssignal beispielsweise um eine Laserlichtlinie, so kann es sich bei dem anderen Beleuchtungssignal alternativ zur flächigen Beleuchtung ebenfalls um eine Laserlichtlinie handeln.

Die Beleuchtungseinrichtung 12 kann eine einzelne Lichtquelle umfassen, die ausgebildet ist, um sequentiell nacheinander die Beleuchtungssignale 18 und 22 mit unterschiedlichen Intensitäten auszusenden. Alternativ kann die Beleuchtungseinrichtung 12 zumindest eine erste und eine zweite Signalquelle umfassen, die ausgebildet sind, um das erste und zweite Beleuchtungssignal 18 und 22 zeitgleich oder zeitlich versetzt zueinander auszusenden.

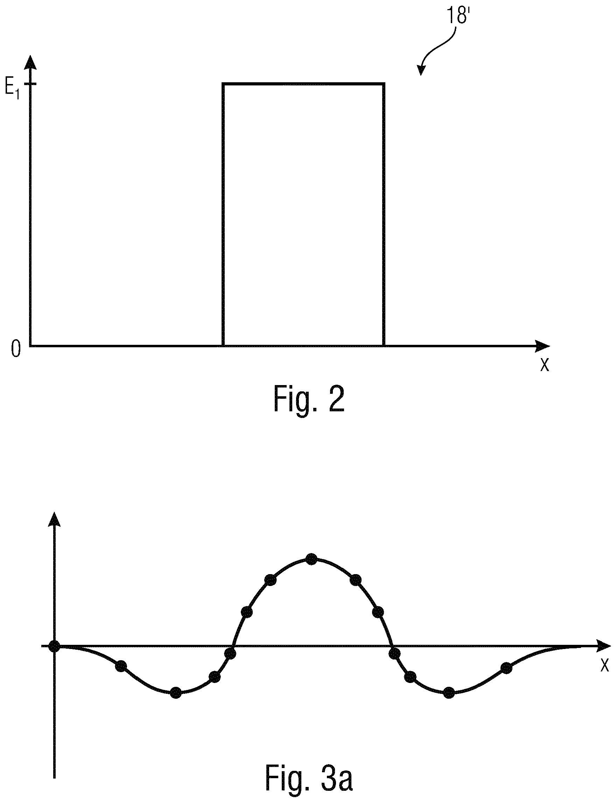

Gemäß einer Ausführungsform ist die Beleuchtungseinrichtung 12 ausgebildet, um die Beleuchtungsstrahlungen 18 und 22 jeweils als Laserlichtlinie auszusenden, die zwei voneinander verschiedene Intensitätspegel $E_1$ und $E_2$ aufweisen. Das bedeutet, die Beleuchtungseinrichtung kann ausgebildet sein, um eine Laserlinie als Beleuchtungssignal 18 und/oder 22 auszusenden. Die Beleuchtungseinrichtung kann ferner ausgebildet sein, um eine derartige Laserlinie als Top-Hat-Verteilung oder umfassend eine Gauß-Verteilung auszusenden. Eine Top-Hat-Verteilung wird im Zusammenhang mit Fig. 2 beschrieben. Die Beleuchtungseinrichtung kann als Generator zum Generieren zweier voneinander verschiedener Laserlinien mit zwei verschiedenen Pegeln gebildet sein. Die Laserlichtlinien können eine gleiche Charakteristik, etwa in Bezug auf die Wellenlänge, einer Abmessung der Linie auf dem Objekt 26 oder dergleichen, aufweisen. Bei dieser Ausführung ergibt sich für die Differenzen zwischen den logarithmierten Werten theoretisch ein konstanter Wert, der sehr gut ausgewertet werden kann. Es ist vorteilhaft, wenn die kleinere der beiden Intensitäten $E_1$ und $E_2$ eingesetzt wird, um das Einschwingverhalten festzulegen und die Differenz zwischen den logarithmierten Werten den resultierenden Hub- und damit den Signal-Rausch-Abstand des Verknüpfungsergebnisses 32 festlegt. Das Einschwingverhalten kann beispielsweise festgelegt werden, indem das Beleuchtungssignal mit der geringeren Intensität zeitlich vor dem Beleuchtungssignal mit der vergleichsweise höheren Intensität ausgesendet oder erfasst wird. Vorteilhaft an dieser Realisierung ist, dass eine Verwendung eines Schnappschuss-Modus (engl.: snapshot-mode) eines Bildsensors der Erfassungseinrichtung 14 ermöglicht ist, so dass Helligkeitsverteilungen der Projektion auf dem Bildsensor in zeitlich kurzem Abstand erfolgen können. Die resultierenden Signale 28a und 28b können gespeichert oder zwischengespeichert werden und danach in einem zweiten Schritt ausgelesen und/oder verarbeitet werden. Dieser Schritt kann ohne Verzögerung des Messverfahrens ausgeführt werden, selbst wenn die Auswertung eine längere Zeit in Anspruch nimmt, was durch das Zwischenspeichern der Messsignale 28a und 278b ermöglicht ist. Durch die ggf. länger dauernde Berechnung kann ein Auftreten von Bewegungs-Artefakten vermieden werden.

Die Erfassungseinrichtung 14 kann einen Bildsensor aufweisen. Dieser kann zur Erfassung eines Pixels der jeweiligen Aufnahme des Oberflächenbereichs zur Erfassung der Reflexion 18' und zur Erfassung der Reflexion 22' eine erste Speicherzelle und eine zweite Speicherzelle aufweisen. Jeweils eine dieser Speicherzellen eines Pixels kann konfiguriert sein, um eine Lichtinformation bezüglich der jeweiligen Aufnahme zu speichern. Das bedeutet, dass eine erste Speicherzelle des Pixels konfiguriert sein kann, um eine Lichtinformation bezüglich der Aufnahme der Reflexion 18' zu speichern und dass eine zweite Speicherzelle des Pixels konfiguriert ist, um eine Lichtinformation bezüglich der Aufnahme der Reflexion 22' zu speichern. Alternativ oder zusätzlich ist es ebenfalls möglich, dass der Bildsensor zur Erfassung eines Pixels der Aufnahme der Reflexion 18' und 22' jeweils eine Speicherzelle verwendet, die jeweils einem Pixel zugeordnet ist, das bedeutet, ein erstes Pixel weist eine erste Speicherzelle auf und ein zweites Pixel weist eine zweite Speicherzelle auf. Die unterschiedlichen Speicherzellen sind konfiguriert, um eine Lichtinformation bezüglich der unterschiedlichen Aufnahmen zu speichern. Die beiden Speicherzellen der unterschiedlichen Pixel können elektrisch oder optisch miteinander gekoppelt sein, so dass in der ersten und zweiten Speicherzelle aufgenommene Bildsignale identisch sind.

In anderen Worten kann die Speicherung in zwei Speicherzellen eines Pixels oder in den beiden Speicherzellen benachbarter Pixel abgelegt werden. Dabei ist es zweckmäßig, bei der Speicherung in zwei verschiedenen Pixelzellen diese elektrisch oder optisch derart zu koppeln, dass das aufgenommene Bildsignal identisch ist, so dass Aliasing-Effekte vermieden werden können. Ist eine Kopplung der optischen bzw. elektrischen Pixelwerte von der Speicherung in die beiden Speicherzellen nicht möglich, so können die hierin beschriebenen Ausführungsformen dennoch verwendet werden. Es kann beispielsweise bei zwei unterschiedlichen Pixeln die Kombination der verstärkten Werte oder der in eine andere Domäne überführten Werte mittels Binning oder ladungsbasierter Faltung in Gruppen und zur Verringerung der Aliasing-Effekte ausgeführt werden. Als Überführung in eine andere Domäne kann beispielsweise die in den Speicherzellen enthaltene Ladung in eine Spannung, in einen Strom oder in eine andere Ladung verstanden werden. Die Ausführung einer ladungsbasierten Faltung ist beispielsweise in US 2011/0062314 A, JP 2009-0550293 T oder KR 101222942 B1 beschrieben.

Beim Auslesen mittels Snapshot können die korrespondierenden Pixel ausgegeben werden und aus einem oder mehreren Paaren mit den beiden abgelegten Helligkeitsinformationen Differenzen gebildet werden. Dies kann beispielsweise auf der Ausleseleitung analog und mittels positiver und negativer Ströme oder Ladungen im Empfänger, etwa einem differenziellen Ladungs-Transimpedanz-Verstärker (Ladungen/Ströme) oder Operationsverstärker (Spannungen) und/oder nach einer Analog/Digital-Wandlung rechnerisch im digitalen Bereich erfolgen.

Alternativ zu einer Speicherung mittels Snapshot werden Ausführungen geschaffen, die ein sogenanntes Rolling-Shutter-Verfahren (rollender Verschluss) anstelle des Schnappschuss-Verfahrens nutzen. Dies kann insbesondere vorteilhaft sein bei Bildsensoren mit einer sehr schnellen Auslöseschaltung, einer synchronen Ansteuerung der Beleuchtungssignale und/oder bei Betrachtung langsamerer Prozesse. Hierbei kann es vorteilhaft oder wichtig sein, dass Bewegungs-Artefakte vermieden werden. Dies kann erreicht werden, indem die Bewegung in der Zeit zwischen beiden Abtastzeitpunkten entweder klein ist oder die beiden Auslese- und Speicherpositionen entlang jeder Sensorspalte geeignet nachgeführt werden. Das bedeutet, dass die Vorrichtung 10 ausgebildet sein kann, um in einem ersten Messintervall eines der Beleuchtungssignale 18 und 22 auszusenden und eine erste Aufnahme des Oberflächenbereichs basierend auf dem ausgesendeten Beleuchtungssignal zu erstellen. In einem zweiten Messintervall kann die Vorrichtung 10 ausgebildet sein, um das zweite der Beleuchtungssignale 18 und 22 auszusenden und eine zweite Aufnahme des Oberflächenbereichs zu erstellen. Zwischen den Messintervallen kann die Vorrichtung 10 ausgebildet sein, um eine im Wesentlichen unveränderte Relativposition zwischen der Beleuchtungseinrichtung 12, der Erfassungseinrichtung 14 und dem Oberflächenbereich 24 zu erhalten. Hierfür kann die Vorrichtung 10 einen Aktuator aufweisen, der ausgebildet ist, um die Relativposition durch eine Bewegung der Erfassungseinrichtung 14 abhängig von einer Bewegung des Oberflächenbereichs 24 relativ zur Vorrichtung 10 bzw. zur Beleuchtungseinrichtung 12 im Wesentlichen unverändert zu halten. Im Wesentlichen unverändert heißt dabei, dass eine Bewegung stattfinden kann, die das Ergebnis um höchstens 30 %, höchstens 20 % oder höchstens 10 % verfälscht. Vorteilhaft ist ein Stillstand, das bedeutet eine vollständige Beibehaltung der Relativposition. Allerdings können auch geringe Veränderungen in der Relativposition tolerierbar sein.

Ein Rolling-Shutter-Auslesen kann erfolgen, indem zunächst die erste Intensität projiziert und auf dem Bildsensor gespeichert wird und dann die Projektion der zweiten Intensität während des Auslesens weiter erfolgt. Unter diesen Bedingungen werden dann beide Werte eventuell korrigiert, um die mittlerweile erfolgte Bewegung ausgegeben und die Differenz bestimmt. Die Differenzbildung kann von den Ort/Zeitpunkt-Beziehungen des Rolling-Shutter-Modus abgesehen in gleicher Weise erfolgen wie beim Snapshot-Modus.

Fig. 2 zeigt ein schematisches Diagramm einer Intensitätsverteilung der Reflektion 18' des Beleuchtungssignals 18 senkrecht entlang der x-Richtung, also senkrecht zu der y-Richtung. Über den Bereich der Linie, das bedeutet die Linienbreite, kann die Reflektion 18' eine im Wesentlichen konstante Helligkeit, das heißt eine im Wesentlichen konstante Intensität aufweisen. Dies kann auch als Top-Hat-Konfiguration bezeichnet werden und/oder als steile Flanken aufweisend. Die Ausführungen sind ohne Weiteres auf das Beleuchtungssignal 22 übertragbar, beispielsweise wenn das Beleuchtungssignal 22 als Laserlichtlinie ausgesendet wird. Die dargestellte Intensitätsverteilung zeigt beispielhaft eine Breite der Laserlinie, wobei entlang der Breite möglichst steile und an eine senkrechte Flanke angenäherte Signalflanken angeordnet sein können. Die Intensität $E_1$ wird in Anlehnung an einen Zylinderhut (engl.: top hat) ausgesendet.

Die dargestellte Beleuchtungsintensität oder Beleuchtungsintensitätsverteilung $E_1$ bezieht sich dabei auf ein globales Maximum der Intensitätsverteilung über die Linienbreite. Flachere Flanken oder ein schmäleres Plateau können dazu führen, dass eine andere Intensitätsverteilung erhalten wird, wobei auch diese Intensitätsverteilung ein lokales oder globales Maximum aufweist. Die bezeichneten Intensitäten $E_1$ und $E_2$ der Beleuchtungssignale 18 und 22 können somit globale Maxima der jeweiligen Intensitätsverteilungen sein.

Erfolgt die Ermittlung der Breite der Laserlinie durch Vergleichen mit einer konstanten Schwelle, so kann der entsprechende festgestellte Wert der Breite bei unterschiedlichen Intensitäten variieren, sowohl im linearen als auch im logarithmischen Auslesemodus. Dabei ist es ggf. unbeachtlich, ob die Schwelle extern vorgegeben wird oder ob sie sich aus dem Hintergrundsignal, das heißt einem Pegel der unbeleuchteten Oberfläche oder einem Dunkelsignal, ergibt. Je größer der Pegel ist, umso breiter ist die Linie.

Unterschiedliche detektierte Linienbreiten können bei einer Differenzbildung zu Überhöhungen im Randbereich der Linien führen. Dies kann dazu führen, dass die Annahme der vollständigen Kompensation der Reflektanzterme nicht mehr vollständig zutreffend ist und dass das vorteilhafte Vorgehen der dort illustrierten Differenzbildung nicht mehr zielführend ist. Dieses Problem lässt sich durch den Einsatz einer Laserlinie mit konstantem Helligkeitsprofil, das heißt einer Top-Hat-Verteilung minimieren.

Aufgrund des steilen Anstiegs an den Randbereichen kann die abgebildete Linienbreite in einem geringen Umfang bzw. sehr schwach je nach Steilheit mit der Intensität variieren. Dies ermöglicht eine einfachere und genaue Auswertung.

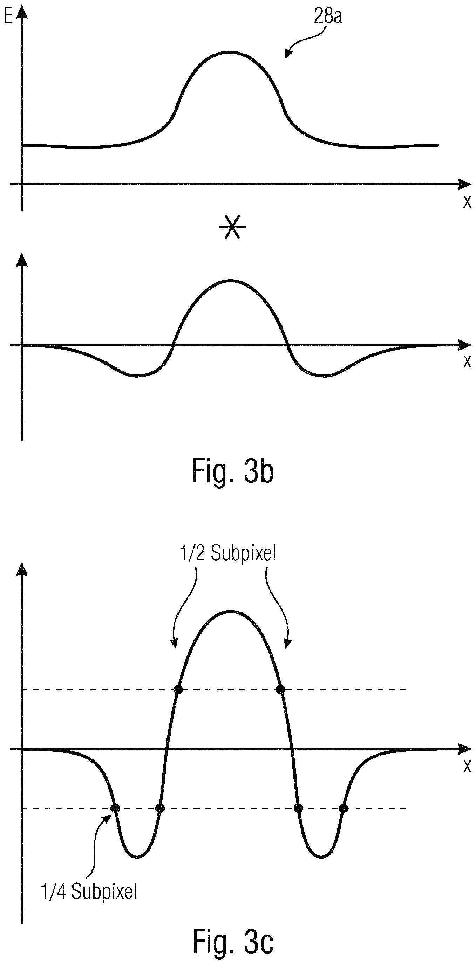

Zum Auslesen der Bilddaten und/oder zur Lokalisation der Laserlinie in dem Objektbereich 24 kann die Auswerteeinrichtung 16 oder eine Vorrichtung, der das Verknüpfungsergebnisses 32 bereitgestellt wird, eine Filterung der jeweiligen Signale ausführen. Beispielsweise können die Signale 28a und 28b durch die Auswerteeinrichtung 16 gefiltert werden. Dies kann auch bereits in der Erfassungseinrichtung 14 erfolgen, das bedeutet, die Auswerteeinrichtung 16 kann zumindest teilweise Teil der Erfassungseinrichtung 14 sein. Durch die Filterung der Messsignale 28a und 28b kann ausgenutzt werden, dass beim Auslesen in einer oder mehreren Zeilen der Bilder die Pixelwerte mit einem digitalen Wert, etwa über Ladungspulse-Pulsweite des Ausgabestroms oder Pulsanzahl, multiplizierbar sind. Für die vorzeichenbehaftete Multiplikation kann der Speicher, etwa eine SI-Zelle (SI = Switched Current, also Stromspeicherzelle) bei Verwendung eines Stromausgangs oder bei differenziellem Ausgang eine der beiden Ausgabeleitungen genutzt werden. Dadurch kann bereits vor dem Analog/Digital-Wandeln eine oder mehrere Filterungen durchgeführt werden. Die Auswerteeinrichtung 16 kann somit ein Filter aufweisen, das ausgebildet ist, um das Messsignal 28a und/oder das Messsignal 28b einer Filteroperation zu unterziehen. Alternativ oder zusätzlich kann die Auswerteeinrichtung 16 ausgebildet sein, um das Verknüpfungsergebnisses 32 einer Filteroperation zu unterziehen. Hierfür können Filter der Auswerteeinrichtung 16 Filterkerne aufweisen. Diese können konfiguriert sein, um eine zeilenweise Multiplikation für eine Faltung durchzuführen, etwa zur Rauschunterdrückung und/oder zur Bandpassfilterung und/oder zur Anwendung eines Tiefpasses zur Rauschunterdrückung und/oder zur Anwendung eines Hochpasses zur Detektion der Position der Kante. Die Kerne können symmetrisch oder asymmetrisch bezüglich der Mittelsenkrechten in y-Richtung gebildet sein. Beispiel für einen symmetrischen Kern ist der in Fig. 3c abgebildete sog. "Mexikanerhut". Das bedeutet, dass die Auswerteeinrichtung 16 ausgebildet sein kann, um basierend auf der Filteroperation ein Filterergebnis zu erhalten, und um aus dem Filterergebnis die Position des ersten Beleuchtungssignals auf den Oberflächenbereich abzuleiten, bzw., um die Position der Projektion des ersten Beleuchtungssignals auf die Oberfläche des Messobjekts abzuleiten.

Die Auswerteeinrichtung kann ausgebildet sein, um das Filterergebnis mit einem Schwellwert zu vergleichen, um die Position des Beleuchtungssignals 18 abzuleiten. Ausführungsformen ermöglichen ein schnelles Scannen des kompletten Bildfeldes, das heißt des Erfassungsbereichs der Erfassungseinrichtung 14, mit einer verringerten Auflösung. Filter können mehrere Pixel zu einem Summensignal zusammenfassen. Dadurch ist es möglich, mit entsprechend breiten, das heißt mehrere Pixel umfassenden, Filterkernen die komplette Bildmatrix in wenigen Schritten zu scannen. Es werden trotzdem alle Pixel betrachtet und ein optisches Aliasing durch ein Überspringen von Zellen vermieden. Dieses Verfahren ist mit bekannten Bildsensoren nicht möglich, da diese immer nur eine Zeile zur gleichen Zeit ausgeben können. Durch Anwendung des Grobscans kann der eigentlich interessante Bereich, das heißt in welchem die Laserlinie mit hoher Wahrscheinlichkeit von zumindest 95 %, zumindest 98 % oder zumindest 99 % angeordnet ist, sehr schnell ermittelt werden, um anschließend auf einem reduzierten Ausschnitt des Bildfeldes einen feinstufigen Scan vorzunehmen. Das bedeutet, die Auswerteeinrichtung 16 kann ausgebildet sein, um in einem ersten Schritt einen Grobscan mit einer geringen Auflösung, die höchstens einen Faktor von 0,6, höchstens 0,4 oder höchstens 0,2 der möglichen Auflösung des Bildsensors beträgt, auszuführen, um so einen Bereich zu ermitteln, in dem die Anwesenheit der Laserlinie vermutet wird und um in einem zweiten Schritt einen Feinscan mit einer vergleichsweise höheren Auflösung in diesem Bereich durchzuführen.

Gemäß Ausführungsformen ist die Auswerteeinrichtung 16 für die Durchführung des Grobscans ausgebildet, um die Messsignale 28a und 28b auszuwerten, die auf einem Bild mit einem hohen Dynamikumfang (high dynamic range - HDR)-Bild basieren. Zur Durchführung eines solchen HDR-Algorithmus kann die Auswerteeinrichtung ausgebildet sein, um die Differenz aus zwei Signalen mit unterschiedlicher Beleuchtungsstärke in je einem Pixel zu bilden. Soll anschließend jedoch noch ein Filterkern mit positiven und negativen Koeffizienten angewendet werden, so kann das Differenzsignal positiv und negativ ausgegeben werden. In anderen Worten ist eine grundsätzliche Idee darin begründet, dass in einem Pixel bei zwei abgespeicherten werten (für $E_1$ und $E_2$) oder bei benachbarten Pixeln, wobei in dem einen $E_1$ und dem anderen $E_2$ abgelegt ist, eine Verrechnung (also das zeilenweise Multiplizieren und die spaltenweise Ausgabe der Produkte) erfolgt, was z.B. mit dem Mexikanerhut-Filter durchgeführt werden kann. Die Invertierung des Vorzeichens kann im Pixel z.B. durch Stromspiegel, SI-Zelle (Strom-Signal) und Umpolen von Kondensatoren (Spannungssignal) und/oder durch Ausgabe auf zwei unterschiedliche Leitungen (differentielle Architektur) erfolgen. Dabei wird eine als positive und die andere als negative Summationsleitung betrachtet. Auch ist es möglich eine sequentielle Ausgabe vorzunehmen, erst die eine und dann die andere Polarität. Dann erfolgt die Bewertung in der Auswerteschaltung. Dies ist mit einer differenziellen Architektur einfach zu realisieren. Bei einer nicht differenziellen Architektur kann jedoch zumindest das positive Differenzsignal oder das negative Differenzsignal zur Verfügung stehen, abhängig davon, welcher Term von welchem abgezogen wird. Eine Lösung kann in der Auswerteeinrichtung dadurch implementiert werden, dass die negativen und positiven Anteile des Filters nacheinander ausgegeben werden, wobei die Invertierung des negativen Anteils durch ein sogenanntes Umpolen eines Speicherkondensators erreichbar ist. Eine weitere Lösung kann dadurch implementiert werden, dass ein herkömmlicher Filter angewendet wird, etwa ein Mexikaner-Hut, wobei die positiven und negativen Anteile in unterschiedlichen Beleuchtungsstärken aufgenommen wurden. Der Mexikanerhut weist in der Mitte einen positiven und links und rechts daneben einen negativen Term auf. Ausführungsformen sind ausgebildet, um für den Mittleren Bereich (Hauptmaximum: positiven Bereich) die einen und den äußeren (erste Nebenmaxima: negativen) Bereich die anderen Pixelwerte zu benutzen, d.h., zu verarbeiten. Hierfür können in jeder Zeile beim Differentiellen Auslesen die Ergebnisse nur auf die eine oder andere Ausgabeleitung ausgegeben werden. Das spart Aufwand oder Zeit führt allerdings einen gewissen Fehler (deswegen ist von einer Näherung die Rede). Alternativ wäre es möglich, zweimal denselben Mexikanerhut nur mit unterschiedlichen Vorzeichen auf die für $E_1$ und $E_2$ gespeicherten Pixelwerte anzuwenden. Letztgenanntes Verfahren, das heißt die Aufzeichnung positiver und negativer Anteile mit unterschiedlichen Beleuchtungsstärken kann zumindest eine Näherung des HDR-Algorithmus liefern und kann die breiten Variationen der Laserlinie an Reflektanzsprüngen zumindest teilweise unterdrücken.

Die auf zumindest eines der Messsignale oder auf das Verknüpfungsergebnis angewendete Filteroperation kann eine Faltung des ersten Messsignals und des zweiten Messsignals oder eine Faltung des Verknüpfungsergebnisses mit einem einen Funktionsverlauf implementierenden Faltungskern oder Filterkern aufweisen. Beispiele für einen symmetrischen Faltungskern sind beispielsweise ein sogenannter in Fig. 3a dargestellter Mexikaner-Hut, der einer si-Funktion (sin(x)/x) entspricht. Die si-Funktion kann an der x-Achse verschoben sein. Eine si(x)-Funktion kann ein Hauptmaximum und eine Anzahl von Nebenmaxima aufweisen. Beispielsweise kann eine Anzahl von zwei Nebenmaxima angeordnet sein. Die x-Achse bezieht sich auf eine auszuwertende Nummer einer Bildzeile, während Y ein Faktor der Faltung ist.

Fig. 3b zeigt schematisch eine Darstellung der miteinander gefalteten Signale 28a und des Mexikaner-Hutes aus Fig. 3a.

Fig. 3c zeigt schematisch eine Darstellung des Faltungsergebnisses der beiden gefalteten Signale aus Fig. 3b. Mit ¼ und ½ sind eine Anzahl der X-Positionen bezeichnet, an denen ein Nulldurchgang detektiert wurde. Diese Positionen können unter Einbeziehung der bekannten Form des Faltungskerns benutzt werden um die Mitte in Fig. 3c also die Mitte der Laserlinie zu bestimmen. Im einfachsten Fall kann bei einem symmetrischen Faltungskern der Durchschnitt verwendet werden. Auch ein gewichteter Durchschnitt ist in Ausführungsformen vorgesehen. Ein Ziel dabei kann es sein, möglichst wenige Schwellen zu benutzen.

Dies ermöglicht, dass lediglich Schwellwerte für eines der Vorzeichens, das heißt positiv oder negativ festzulegen oder erforderlich sind, etwa wenn in diesem Bereich kein Nulldurchgang stattfindet. Dies ist beispielsweise in Fig. 3c für den Bereich 1/2 Subpixel für ein positives Vorzeichen und für 1/4 Subpixel für ein negatives Vorzeichen dargestellt. Vorteilhaft daran ist, dass eine derartige Berechnung sehr einfach erfolgen kann. Alternativ kann ein asymmetrischer Faltungskern genutzt werden. Dies kann zwar eine Definition einer positiven und einer negativen Schwelle erforderlich machen, kann unter Umständen jedoch besser auszuwerten sein, insbesondere, wenn zwischen den Anstiegen unterschiedlicher Vorzeichen unterschieden werden soll. Auch wenn dies etwas komplizierter in der Umsetzung ist, so ermöglicht es, eine detaillierte Auswertung durchzuführen.

Ausführungsbeispiele ermöglichen die Verwendung verschiedener digitaler Koeffizienten, etwa im Zusammenhang mit einem echten analogen Mexikaner-Hut, wie er in Fig. 3a dargestellt ist. Dies ermöglicht eine Definition einer Pulszahl und/oder einer Pulsweite und/oder eines Vorzeichens unabhängig voneinander. Das Vorzeichen kann mittels einer differenziellen Ausgabe, mittels einer Invertierung, mittels einer SI-Zelle und/oder ladungsbasiert durch Umpolung von Kapazitäten erhalten werden.

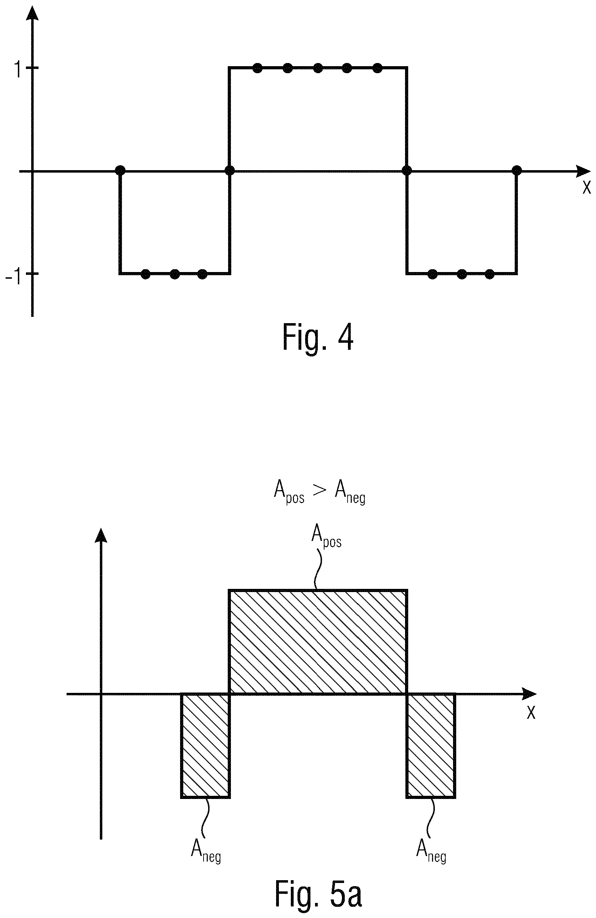

Fig. 4 zeigt eine schematische Darstellung eines Filters, das abstandsweise lediglich positive oder lediglich negative Werte aufweisen kann, um einen sogenannten vereinfachten digitalen Mexikaner-Hut zu erhalten. Dieser ermöglicht eine einfache Realisierung der Ansteuerung. Pixelzellen mit ladungsbasierter Ausgabe und spaltenweiser Summation können im vorliegenden Sensorfall verwendet werden. Die dargestellte Vorgehensweise ist nicht an HDR gebunden sondern eine Vorteilhafte Anwendung der ladungsbasierten Ausgabe.

Ferner kann eine Filterung ausgeführt werden, indem einer oder mehrere der oben genannten Filter mittelwertfrei ausgeführt werden, das bedeutet, dass bei einem konstanten Eingangsverlauf ein nullzahliges Faltungsergebnis erhalten wird. Dies ist beispielhaft anhand der Fig. 5a bis 5c illustriert. Fig. 5a zeigt eine schematische Darstellung eines Filters, das positive Abschnitte, die mit $A_{pos}$ bezeichnet sind, und negative Abschnitte, die mit $A_{neg}$ bezeichnet sind, aufweist. Die positiven Flächen $A_{pos}$ der Filterkennlinie können flächenmäßig größer sein, als die negativen Flächen $A_{neg}$.

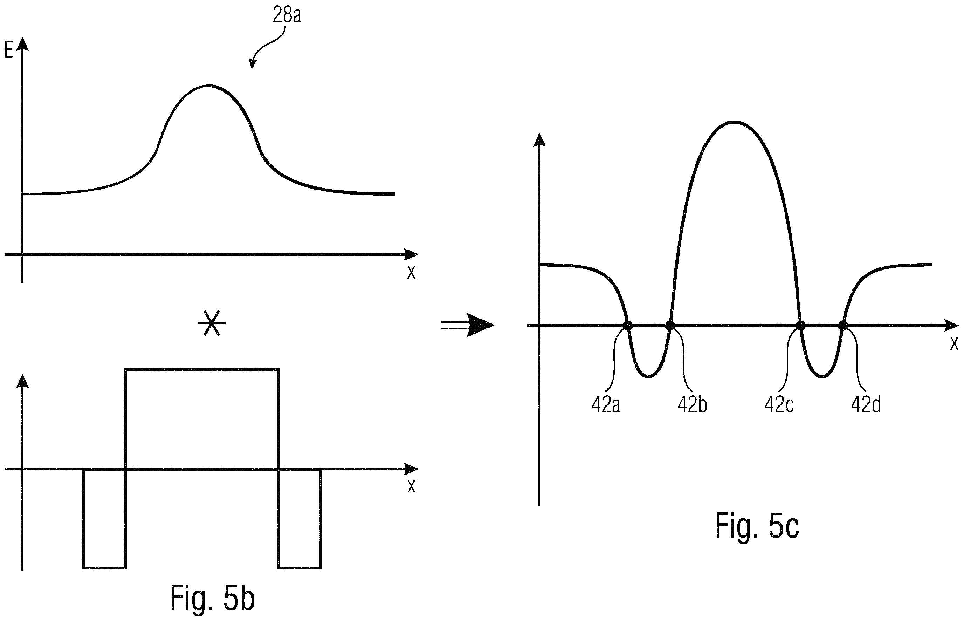

Fig. 5b zeigt die Operanden der Faltungsoperation, das Messsignal 28a und das Filter gemäß Fig. 5a, wie sie beispielsweise von der Auswerteeinrichtung 16 ausführbar ist.

Fig. 5c zeigt eine schematische Darstellung des Faltungsergebnisses der Faltung aus Fig. 5b.

Dies kann als Standard-Variante realisiert sein und zu einem Vergleich des Ergebnisses mit 0 führen. Ein Problem hierbei kann darin bestehen, dass allgemein viele Nulldurchgänge durch Zufallsprozesse erhalten werden, also Rauschen, insbesondere auf stark reflektierenden Flächen erhalten wird, was eine zusätzliche Anhebung des Grundrauschens mit sich bringen kann. Der Vergleich mit 0 kann so verstanden werden, dass Nullpunkte 42a bis 42d im Faltungsergebnis als Schwellwerte genutzt werden können.

Ferner können die Faltungskerne so implementiert sein, dass sie nicht mittelwertfrei sind, das heißt, sie können einen zusätzlichen Offset aufweisen. Dies ermöglicht eine automatische Erzeugung eines dynamischen, den Signalpegeln der beteiligten Pixel angepassten Schwellwerts, eine zuverlässige Detektion in schwach und stark beleuchteten Szenen und/oder eine einfache Auswahl einer Schwelle, die so niedrig gestaltet ist, dass ein schwaches Signal, das heißt eine Laserlinie auf dunklem Untergrund, zuverlässig erkannt wird. Die Auswahl der Schwelle kann auch ein Anforderungskriterium an die Zuverlässigkeit des Systems sein.

Nach einer spaltenweise Ausgabe der Summen aus mehreren Zeilen kann eine Auswertung erfolgen. Diese Auswertung kann in der Auswerteeinrichtung 16 und/oder in einer Vorrichtung, die das Verknüpfungsergebnisses 32 erhält, erfolgen. Eine Auswertung kann auf vielfache Art erfolgen. Beispielsweise kann eine Auswertung mittels einer Analog/Digital-Wandlung und/oder einer Auswertung mittels Schwellwertbildung erfolgen. Ersteres, das heißt die Auswertung mittels Analog/Digital-Wandlung kann beispielsweise durch Interpolation eine hohe Subpixel-Genauigkeit für die Positionsbestimmung der Laserlinie ermöglichen. Die Auswertung mittels Analog/Digital-Wandlung kann jedoch zu einer Erhöhung des Umsetzungsaufwandes und damit zu einer Reduktion der Geschwindigkeit führen.

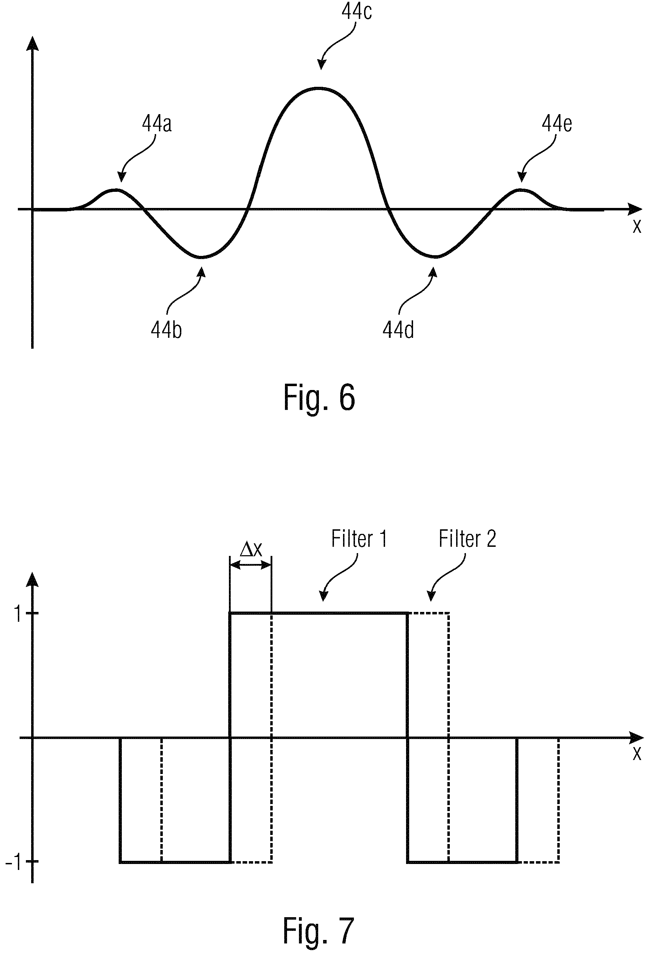

Wird die Auswertung mittels Schwellwertbildung genutzt, so kann der Wert pro Schwelle auf 1/2 Subpixel bei zwei Anstiegen pro Peak bzw. 1/4 Subpixel bei vier Anstiegen pro Peak, etwa bei einem einfachen Mexikaner-Hut für eine Auswertung der äußeren Extrema eingeschränkt werden. Jedes zusätzlich ausgewertete Extremum kann zwei weitere Stützpunkte liefern, was jeweils zu einer linearen Erhöhung der Auflösung führt, etwa bei Mexikaner-Hüten mit mehr als drei Extrema des Kerns. Dies ist beispielhaft anhand der Fig. 6 dargestellt, die die Kennlinie eines Faltungskerns mit fünf Extrema 44a bis 44e zeigt, der beispielsweise als Mexikaner-Hut mit fünf Extrema beschrieben werden kann. Beispielsweise kann die Filterkennlinie aus Fig. 6 eine Anzahl von vier Nebenmaxima aufweisen. Andere Konfigurationen mit einer anderen, bevorzugt ungeraden, Anzahl von Extrema sind ebenfalls implementierbar.

Die Auswertung mittels Schwellwertbildung kann auf verschiedene Art und Weise erfolgen, etwa durch Ausgabe eines Vergleichs mit einer Referenz-Spannung, einem Vergleich mit einem Nullpunkt oder Nulldurchgang und/oder insbesondere bei ladungsbasierten Auswertungen, einer spaltenweise Ausgabe von Vergleichsladungen und einem Vergleich mit einer definierten Schwelle.

Zur Erhöhung der Genauigkeit unter Beibehaltung des Vorgehens, etwa bei der Schwellwertbildung mit beliebigen Filterkernen schaffen Ausführungsbeispiele eine Anordnung zur Ausgabe mehrerer örtlich versetzter Filterkerne, wobei deren Beitrag zum Summensignal variiert wird, etwa mittels einer Pulsweitenmodulation. Beispielsweise kann eine anhand von Fig. 7 dargestellte subpixelgenaue Verschiebung des Filterkerns folgen, etwa mittels PWM-Ansteuerung (PWM = Pulsweitenmodulation). Für eine Verdoppelung der Auflösung, etwa entlang der y-Richtung können Zwischenschritte eingeführt werden, wobei sich das Summensignal beispielsweise zu 50 % aus Zeile i und zu 50 % aus einer benachbarten Zeile i + 1 zusammensetzen kann. Das resultierende Signal kann einer rechnerischen i + 0,5 entsprechen. Bei einer ladungsbasierten Ausgabe aus dem Bildsensor können die Anteile über die Ausgabezeit des Filters in jeder Zeile sehr einfach gesteuert werden. Das Verfahren ist nicht auf Vielfache von 2 beschränkt, sondern kann mit einer beliebigen Anzahl von Zwischenschritten angewendet werden, das heißt es ist auch eine Erhöhung der Auflösung, die von einer Verdoppelung verschieden ist, möglich. Die Auslesezeit bei gleicher Pixelanzahl verlängert sich mit diesem Verfahren möglicherweise um den Faktor der Zwischenschritte, was jedoch im Hinblick auf den Genauigkeitsgewinn toleriert werden kann. Die Filter können beliebig ausgestaltet sein, also auch (binarisierte) Spaltfunktionen oder Ähnliches. Eine Besonderheit liegt darin, dass während der Multiplikation (Faltung) nach einer gewissen Zeit, z.B. der Hälfte der Ausgabezeit, der Faltungskern um eine Zeile verschoben wird. Bezüglich der Pixel jeder Zeile ergibt sich auf diese Art und Weise eine Pulsweitenmodulation (PWM).

Das Beleuchtungssignal kann ein Linienmuster umfassen, das sich entlang der Zeilenrichtung y auf dem Oberflächenbereich 24 erstreckt. Die Auswerteeinrichtung 16 kann ausgebildet sein, um die Position der Reflexion des Beleuchtungssignals 18 auf dem Oberflächenbereich 24 entlang der Spaltenrichtung x, die senkrecht zu der Richtung y angeordnet ist, für eine Vielzahl von lateral versetzten Spalten zu erfassen. Die Auswerteeinrichtung 16 kann eine Mehrzahl von Filterkernen aufweisen, die ausgebildet sind, um das Messsignal 28a und/oder das Messsignal 28b und/oder das Verknüpfungsergebnis 32 einer Filteroperation zu unterziehen. Die Mehrzahl von Filterkernen ist lateral versetzt zueinander um einen Abstand $\Delta x$ entlang der Spaltenrichtung x angeordnet. Der Versatz $\Delta x$ kann geringer sein als ein Abstand zweier benachbarter Spalten auf dem Bildsensor.

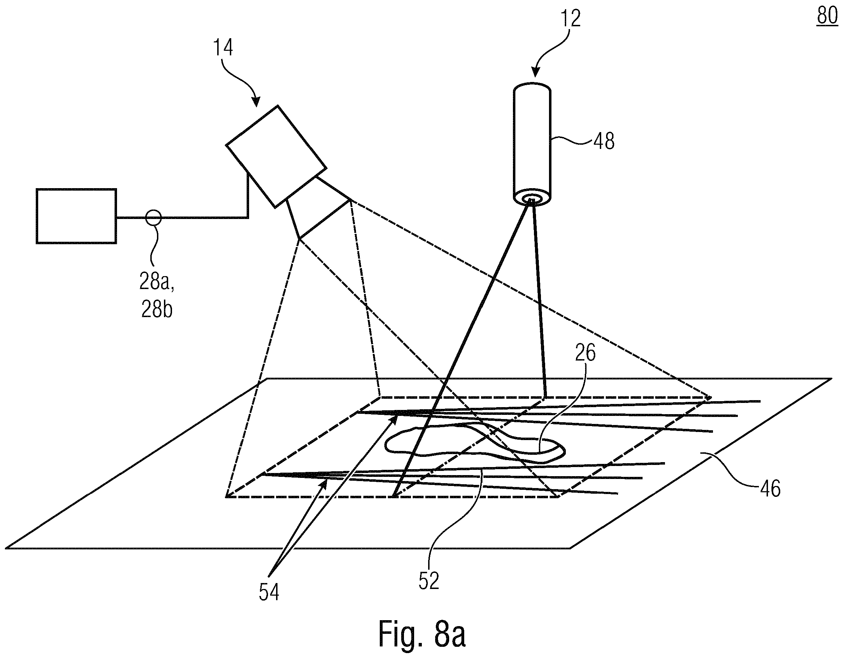

Fig. 8a zeigt eine schematische perspektivische Ansicht einer Vorrichtung 80 gemäß einem Ausführungsbeispiel. Das zu vermessende Objekt 26 kann auf einem Träger oder einer Unterlage 46 angeordnet sein, etwa einem Messtisch oder einer beweglichen Auflage. Die Beleuchtungseinrichtung 12 kann einen oder mehrere Laserliniengenerator oder - projektor 48 umfassen, der ausgebildet ist, um die Beleuchtungssignale 18 und 22 auszusenden, um eine Laserlinie 52 mit unterschiedlichen Intensitäten auf den Objektbereich und mithin das zu vermessende Objekt 26 zu projizieren. Alternativ können die Beleuchtungssignale 18 und 22 mit zwei verschiedenen Projektoren erzeugt werden. An dem Träger 46 können Markierungen 54 angeordnet sein, die eine Lokalisation und/oder Identifikation des Objekts 26 ermöglichen, Die Erfassungseinrichtung 14 kann als Flächenkamera zur flächigen Erfassung des Trägers 46 ausgebildet sein.

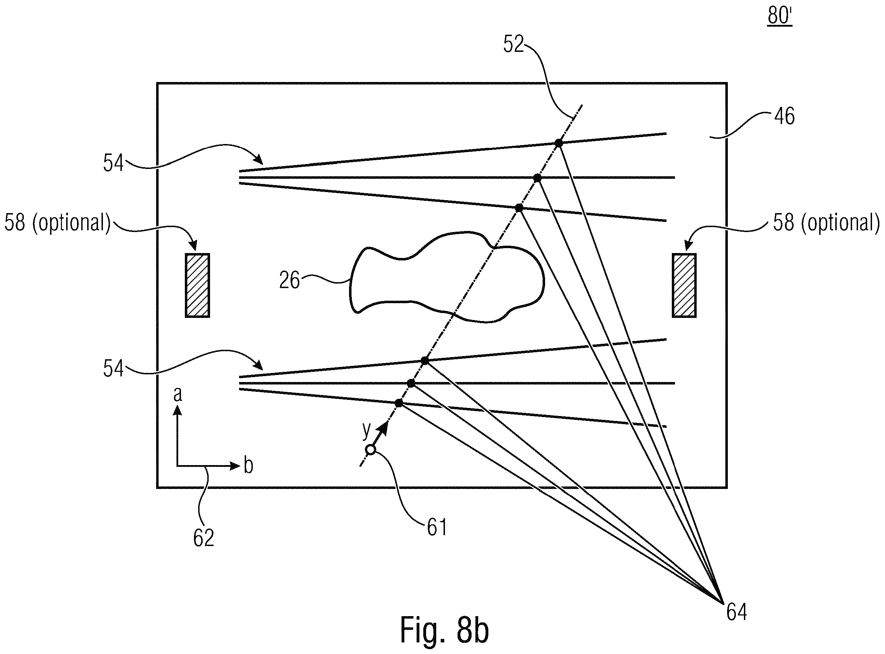

Fig. 8b zeigt eine schematische Aufsicht auf eine Vorrichtung 80' gemäß einem weiteren Ausführungsbeispiel, die über die Markierung 54 hinaus zusätzlich optionale Informationsquellen 58 zur Wiedergabe von Parametern und/oder Identifikationen aufweist. Dies kann beispielsweise durch Barcodes oder dergleichen erfolgen. Ein laserlinienfestes Koordinatensystem 61, etwa umfassend die Richtung y kann von einem unterlagenfesten Koordinatensystem 62, das auf den Träger 46 bezogen ist, verschieden sein, etwa durch Drehung im Raum. Schnittpunkte 64 der Laserlinie 52 mit den Markierungen 54 ermöglichen eine Transformation der Koordinatensysteme 62 und 61 ineinander.

Ein erster Aspekt hierin beschriebener Ausführungen definiert eine Vorrichtung mit:

einer Beleuchtungseinrichtung (102), die ausgebildet ist, um ein erstes Beleuchtungssignal mit einer ersten Beleuchtungsintensität ($E_1$) und ein zweites Beleuchtungssignal mit einer zweiten Beleuchtungsintensität ($E_2$) in Richtung eines Oberflächenbereichs (104) eines zu vermessenden Objekts auszusenden, wobei die zweite Beleuchtungsintensität ($E_2$) geringer ist als die erste Beleuchtungsintensität ($E_1$);

einer Erfassungseinrichtung (101), die ausgebildet ist, um ein erstes Messsignal basierend auf einer ersten Reflexion des ersten Beleuchtungssignals auf dem Oberflächenbereich bereitzustellen, und um ein zweites Messsignal basierend auf einer zweiten Reflexion des zweiten Beleuchtungssignals auf dem Oberflächenbereich bereitzustellen;

einer Auswerteeinrichtung, die ausgebildet ist, um das erste Messsignal und das zweite Messsignal miteinander zu verknüpfen, um ein Verknüpfungsergebnis zu erhalten, aus dem eine Position des ersten Beleuchtungssignals auf dem Oberflächenbereich ableitbar ist, wobei ein Einfluss einer Reflektanz des Oberflächenbereichs in dem Verknüpfungsergebnis verglichen mit dem Einfluss auf das erste und zweite Messsignal reduziert i ist;

wobei die Auswerteeinrichtung ausgebildet ist, um basierend auf dem ersten Messsignal einen ersten logarithmierten Wert zu bilden und um basierend auf dem zweiten Messsignal einen zweiten logarithmierten Wert zu bilden, wobei in dem ersten logarithmierten Wert und in dem zweiten logarithmierten Wert der Einfluss der Reflektanz ein Summand ist, so dass durch Subtraktion des zweiten logarithmierten Werts von dem ersten logarithmierten Wert, um das Verknüpfungsergebnis zu erhalten, der Einfluss der Reflektanz reduziert ist;

wobei das erste Beleuchtungssignal und das zweite Beleuchtungssignal einen gleichen Wellenlängenbereich aufweisen, so dass beide Signale an einem gleichen Punkt in dem Oberflächenbereich gleichermaßen von der Reflektanz oder Reflektivität des Oberflächenbereichs beeinflusst sind.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung mit:

    einer Beleuchtungseinrichtung (12), die ausgebildet ist, um ein erstes Beleuchtungssignal (18) mit einer ersten Beleuchtungsintensität ($E_1$) und ein zweites Beleuchtungssignal (22) mit einer zweiten Beleuchtungsintensität ($E_2$) in Richtung eines Oberflächenbereichs (24) eines zu vermessenden Objekts (26) auszusenden, wobei die zweite Beleuchtungsintensität ($E_2$) geringer ist als die erste Beleuchtungsintensität ($E_1$);
    einer Erfassungseinrichtung (14), die ausgebildet ist, um ein erstes Messsignal (28a) basierend auf einer ersten Reflexion (18') des ersten Beleuchtungssignals (18) auf dem Oberflächenbereich (24) bereitzustellen, und um ein zweites Messsignal (28b) basierend auf einer zweiten Reflexion (22') des zweiten Beleuchtungssignals (22) auf dem Oberflächenbereich (24) bereitzustellen;

einer Auswerteeinrichtung (16), die ausgebildet ist, um das erste Messsignal (28a) und das zweite Messsignal (28b) miteinander zu verknüpfen, um ein Verknüpfungsergebnis (32) zu erhalten, aus dem eine Position $(x_0/y_0)$ des ersten Beleuchtungssignals (18) auf dem Oberflächenbereich (24) ableitbar ist, wobei ein Einfluss einer Reflektanz (R) des Oberflächenbereichs (24) in dem Verknüpfungsergebnis (32) verglichen mit dem Einfluss auf das erste und zweite Messsignal (28a, 28b) reduziert ist;

wobei die Auswerteeinrichtung (16) ausgebildet ist, um basierend auf dem ersten Messsignal (28a) einen ersten logarithmierten Wert zu bilden und um basierend auf dem zweiten Messsignal (28b) einen zweiten logarithmierten Wert zu bilden, wobei in dem ersten logarithmierten Wert und in dem zweiten logarithmierten Wert der Einfluss der Reflektanz ein Summand ist, so dass durch Subtraktion des zweiten logarithmierten Werts von dem ersten logarithmierten Wert, um das Verknüpfungsergebnis (32) zu erhalten, der Einfluss der Reflektanz reduziert ist;

wobei das erste Beleuchtungssignal (18) und das zweite Beleuchtungssignal (22) einen gleichen Wellenlängenbereich aufweisen, so dass beide Signale an einem gleichen Punkt in dem Oberflächenbereich (24) gleichermaßen von der Reflektanz oder Reflektivität des Oberflächenbereichs (24) beeinflusst sind.

2. Vorrichtung gemäß Anspruch 1 bei der die Auswerteeinrichtung (16) konfiguriert ist, um basierend auf dem Verknüpfungsergebnis (32) die Position $(x_0/y_0)$ des ersten Beleuchtungssignals (18) auf dem Oberflächenbereich (24) zu bestimmen.

3. Vorrichtung gemäß Anspruch 1 oder 2, bei der die Beleuchtungseinrichtung (12) zumindest einen Linienprojektor (48) umfasst, um das erstes Beleuchtungssignal (18) und das zweites Beleuchtungssignal (22) auszusenden; oder bei der die Beleuchtungseinrichtung (12) einen Linienprojektor umfasst, der ausgebildet ist, um das erstes Beleuchtungssignal (18) auszusenden, und eine Lichtquelle aufweist, die ausgebildet ist, um den Oberflächenbereich (24) in einem Beleuchtungsbereich im Wesentlichen homogen zu beleuchten, wobei der Beleuchtungsbereich so angeordnet ist, dass das erstes Beleuchtungssignal (18) zumindest bereichsweise mit dem Beleuchtungsbereich überlappt.

4. Vorrichtung gemäß einem der vorangehenden Ansprüche, wobei die Beleuchtungseinrichtung (12) ausgebildet ist, um das zweites Beleuchtungssignal (22) zeitweise nicht auszusenden, wenn das erste Beleuchtungssignal (18) ausgesendet wird.

5. Vorrichtung gemäß einem der vorangehenden Ansprüche, wobei die Vorrichtung so ausgebildet ist, dass n einem ersten
Messintervall
die Beleuchtungseinrichtung (12) ausgebildet ist, um das erstes Beleuchtungssignal (18) auszusenden, und die Erfassungseinrichtung (14) ausgebildet ist, um eine erste Aufnahme des Oberflächenbereichs (24) zu erfassen; und in einem zweiten Messintervall
die Beleuchtungseinrichtung (12) ausgebildet ist, um das zweites Beleuchtungssignal (22) auszusenden, und die Erfassungseinrichtung (14) ausgebildet ist, um eine zweite Aufnahme des Oberflächenbereichs (24) zu erfassen; wobei die Vorrichtung einen Aktuator aufweist, der ausgebildet ist, um zwischen dem ersten Messintervall und dem zweiten Messintervall eine im Wesentlichen unveränderte Relativposition zwischen der Beleuchtungseinrichtung (12), der Erfassungseinrichtung (14) und dem Oberflächenbereich (24) zu erhalten.

6. Vorrichtung gemäß Anspruch 5, bei der die Erfassungseinrichtung (14) einen Bildsensor aufweist, der zur Erfassung eines Pixels der ersten und zweiten Aufnahme des Oberflächenbereichs (24) eine erste Speicherzelle und eine zweite dem Pixel zugeordnete Speicherzelle aufweist, wobei die erste Speicherzelle konfiguriert ist, um eine Lichtinformation bezüglich der ersten Aufnahme zu speichern und wobei die zweite Speicherzelle konfiguriert ist, um eine Lichtinformation bezüglich der zweiten Aufnahme zu speichern, oder bei der der Bildsensor zur Erfassung eines Pixels der ersten und zweiten Aufnahme des Oberflächenbereichs (24) eine einem ersten Pixel zugeordnete erste Speicherzelle und eine einem zweiten Pixel zugeordnete zweite Speicherzelle aufweist, wobei die erste Speicherzelle konfiguriert ist, um eine Lichtinformation bezüglich der ersten Aufnahme zu speichern und wobei die zweite Speicherzelle konfiguriert ist, um eine Lichtinformation bezüglich der zweiten Aufnahme zu speichern und wobei die erste und die zweite Speicherzelle elektrisch oder optisch miteinander gekoppelt sind, so dass in der ersten und zweiten Speicherzelle aufgenommene Bildsignale identisch sind.

7. Vorrichtung gemäß einem der vorangehenden Ansprüche, bei der die Auswerteeinrichtung (16) ein Filter aufweist, das ausgebildet ist, um das erste Messsignal (28a) oder das zweite Messsignal (28b) einer Filteroperation zu unterziehen oder, um das Verknüpfungsergebnis (32) einer Filteroperation zu unterziehen, und um aus dem Filterergebnis die Position des ersten Beleuchtungssignals auf den Oberflächenbereich abzuleiten.

8. Vorrichtung gemäß Anspruch 7, bei der die Filteroperation eine Faltung des ersten Messsignals (28a) und/oder des zweiten Messsignals (28b) oder eine Faltung des Verknüpfungsergebnisses (32) mit einem einen Funktionsverlauf implementierenden Faltungskern oder Filterkern aufweist.

9. Vorrichtung gemäß Anspruch 8, bei dem der Faltungskern asymmetrisch bezüglich der Mittelsenkrechten in y-Richtung gebildet ist.

10. Vorrichtung gemäß einem der Ansprüche 7 bis 9, bei der die Auswerteeinrichtung (16) ausgebildet ist, um basierend auf der Filteroperation ein Filterergebnis zu erhalten, und um aus dem Filterergebnis die Position $(x_0/y_0)$ des ersten Beleuchtungssignals (18) auf dem Oberflächenbereich (24) abzuleiten.

11. Vorrichtung gemäß Anspruch 10, bei der die Auswerteeinrichtung (16) ausgebildet ist, um das Filterergebnis mit einem Schwellwert $(E_1')$ zu vergleichen, um die Position $(x_0/y_0)$ der Projektion des ersten Beleuchtungssignals (18) auf die Oberfläche des Messobjekts (26) abzuleiten.

12. Vorrichtung gemäß einem der Ansprüche 7 bis 11, bei der das erstes Beleuchtungssignal (18) ein Linienmuster umfasst, das sich entlang einer Zeilenrichtung (y) auf dem Oberflächenbereich (24) erstreckt, und bei der die Auswerteeinrichtung (16) ausgebildet ist, um die Position der Reflexion auf dem Oberflächenbereich (24) entlang einer Spaltenrichtung (x), die senkrecht zu der Zeilenrichtung (y) angeordnet ist, für eine Vielzahl von lateral versetzten Spalten zu erfassen,
wobei die Auswerteeinrichtung (16) eine Mehrzahl von Filterkernen aufweist, die ausgebildet sind, um das erste Messsignal (28a) oder das zweite Messsignal (28b) oder, um das Verknüpfungsergebnis (32) einer Filteroperation zu unterziehen;
wobei die Filterkerne lateral versetzt zueinander entlang der Spaltenrichtung angeordnet sind.

13. Vorrichtung gemäß Anspruch 12, bei der die Filterkerne einen Versatz $(\Delta x)$ zu einander aufweisen, der geringer ist, als ein Abstand zweier benachbarter Spalten,

14. Verfahren mit folgenden Schritten:

Aussenden eines ersten Beleuchtungssignals (18) mit einer ersten Beleuchtungsintensität $(E_1)$ und eines zweiten Beleuchtungssignals (22) mit einer zweiten Beleuchtungsintensität $(E_2)$ in Richtung eines Oberflächenbereichs (24) eines zu vermessenden Objekts (26), wobei die zweite Beleuchtungsintensität $(E_2)$ geringer ist als die erste Beleuchtungsintensität $(E_1)$;
Bereitstellen eines ersten Messsignals basierend auf einer ersten Reflexion des ersten Beleuchtungssignals auf dem Oberflächenbereich (24), und Bereitstellen eines zweiten Messsignals basierend auf einer zweiten Reflexion des zweiten Beleuchtungssignals auf dem Oberflächenbereich (24);
Auswerten des ersten Messsignals und des zweiten Messsignals durch eine Verknüpfung derselben miteinander, um ein Verknüpfungsergebnis (32) zu erhalten,
aus dem eine Position des ersten Beleuchtungssignals auf dem Oberflächenbereich (24) ableitbar ist, wobei ein Einfluss einer Reflektanz des Oberflächenbereichs (24) in dem Verknüpfungsergebnis (32) verglichen mit dem Einfluss auf das erste und
zweite Messsignal (28b) reduziert ist;
Bilden eines ersten logarithmierten Wertes basierend auf dem ersten Messsignal (28a) und Bilden eines zweiten logarithmierten Wertes basierend auf dem zweiten Messsignal (28b), so dass in dem ersten logarithmierten Wert und in dem zweiten logarithmierten Wert der Einfluss der Reflektanz ein Summand ist, so dass durch Subtraktion des zweiten logarithmierten Werts von dem ersten logarithmierten Wert,
um das Verknüpfungsergebnis (32) zu erhalten, der Einfluss der Reflektanz reduziert ist;
wobei die das erste Beleuchtungssignal (18) und das zweite Beleuchtungssignal (22) einen gleichen Wellenlängenbereich aufweisen und an einem gleichen Punkt in dem Oberflächenbereich (24) gleichermaßen von der Reflektanz oder Reflektivität des Oberflächenbereichs (24) beeinflusst sind.

15. Computerprogramm mit einem Programmcode zur Durchführung des Verfahrens nach Anspruch 14, wenn das Computerprogramm auf einer Vorrichtung gemäß Anspruch 1 abläuft.

**Claims**

1. Device comprising:

   illumination means (12) configured to emit a first illumination signal (18) having a first illumination intensity ($E_1$) and a second illumination signal (22) having a second illumination intensity ($E_2$) in the direction of a surface region (24) of an object to be measured (26), the second illumination intensity ($E_2$) being smaller than the first illumination intensity ($E_1$);
   sensing means (14) configured to provide a first measurement signal (28a) based on a first reflection (18') of the first illumination signal (18) on the surface region (24), and to provide a second measurement signal (28b) based on a second reflection (22') of the second illumination signal (22) on the surface region (24);
   evaluation means (16) configured to combine the first measurement signal (28a) and the second measurement signal (28b) with each other so as to obtain a combination result (32) from which a position ($x_0/y_0$) of the first illumination signal (18) on the surface region (24) may be derived, wherein an influence of a reflectance (R) of the surface region (24) within the combination result (32) is reduced as compared to the influence on the first and second measurement signals (28a, 28b);
   the evaluation means (16) being configured to form a first logarithmized value on the basis of the first measurement signal (28a) and to form a second logarithmized value on the basis of the second measurement signal (28b), wherein in the first logarithmized value and in the second logarithmized value, the influence of the reflectance is an addend, so that by subtracting the second logarithmized value from the first logarithmized value in order to obtain the combination result (32), the influence of the reflectance will be reduced;
   the first illumination signal (18) and the second illumination signal (22) having an identical wavelength range, so that both signals are equally influenced by the reflectance or reflectivity of the surface region (24) at an identical point in the surface region (24).

2. Device as claimed in claim 1, wherein the evaluation means (16) is configured to determine the positon ($x_0/y_0$) of the first illumination signal (18) on the surface region (24) on the basis of the combination result (32).

3. Device as claimed in claim 1 or 2, wherein the illumination means (12) includes at least one line projector (48) in order to emit the first illumination signal (18) and the second illumination signal (22); or wherein the illumination means (12) includes a line projector configured to emit the first illumination signal (18), and comprises a light source configured to illuminate the surface region (24) in an illumination area in an essentially homogeneous manner, the illumination area being arranged such that the first illumination signal (18) overlaps with the illumination area at least in some areas.

4. Device as claimed in any of the previous claims, wherein the illumination means (12) is configured to temporarily not emit the second illumination signal (22) when the first illumination signal (18) is being emitted.

5. Device as claimed in any of the previous claims, wherein the device is configured such that, during a first measurement interval,
   the illumination means (12) is configured to emit the first illumination signal (18), and the sensing means (14) is configured to sense a first picture of the surface region (24);
   and during a second measurement interval,
   the illumination means (12) is configured to emit the second illumination signal (22), and the sensing means (14) is configured to sense a second picture of the surface region (24);
   the device comprising an actuator being configured to obtain, between the first measurement interval and the second measurement interval, an essentially unchanged relative position between the illumination means (12), the sensing means (14) and the surface region (24).

6. Device as claimed in claim 5, wherein the sensing means (14) comprises, for sensing a pixel of the first and second pictures of the surface region (24), an image sensor comprising a first memory cell, and comprising a second memory cell associated with said pixel, the first memory cell being configured to store light information regarding the first picture, and the second memory cell being configured to store light information regarding the second picture, or wherein the image sensor comprises, for sensing a pixel of the first and second pictures of the surface region (24), a first memory cell associated with a first pixel and a second memory cell associated with a second pixel, the first memory cell being configured to store light information regarding the first picture, and the second memory cell being configured to store light information regarding the second picture, and wherein the first and second memory cells are electrically or optically coupled to each other, so that captured image signals are identical within the first and second memory cells.

7. Device as claimed in any of the previous claims, wherein the evaluation means (16) comprises a filter configured to subject the first measurement signal (28a) or the second measurement signal (28b) to a filtering operation or to subject the combination result (32) to a filtering operation, and to derive, from the filtering result, the position of the first illumination signal on the surface region (24).

8. Device as claimed in claim 7, wherein the filtering operation comprises a convolution of the first measurement signal (28a) and/or of the second measurement signal (28b) or a convolution of the combination result (32) with a convolution kernel or filter kernel implementing a course of a function.

9. Device as claimed in claim 8, wherein the convolution kernel is formed asymmetrically in relation to the midperpendicular in the y direction.

10. Device as claimed in any of claims 7-9, wherein the evaluation means (16) is configured to obtain a filtering result on the basis of the filtering operation, and to derive, from the filtering result, the position (xo/yo) of the first illumination signal (18) on the surface region (24).

11. Device as claimed in claim 10, wherein the evaluation means (16) is configured to compare the filtering result to a threshold value ($E_1$') so as to derive the position (xo/yo) of the projection of the first illumination signal (18) on the surface of the object to be measured (26).

12. Device as claimed in any of claims 7-11, wherein the first illumination signal (18) includes a line pattern extending along a row direction (y) on the surface region (24), and wherein the evaluation means (16) is configured to sense the position of the reflection on the surface region (24) along a column direction (x), which is arranged perpendicularly to the row direction (y), for a multitude of laterally offset columns,
wherein the evaluation means (16) comprises a plurality of filter kernels configured to subject the first measurement signal (28a) or the second measurement signal (28b) or the combination result (32) to a filtering operation;
wherein the filter kernels are arranged along the column direction such that they are laterally offset to each other.

13. Device as claimed in claim 12, wherein the filter kernels comprise a mutual offset ($\Delta x$) which is smaller than a distance between two adjacent columns.

14. Method comprising:

emitting a first illumination signal (18) having a first illumination intensity ($E_1$) and a second illumination signal (22) having a second illumination intensity ($E_2$) in the direction of a surface region (24) of an object to be measured (26), the second illumination intensity ($E_2$) being smaller than the first illumination intensity ($E_1$);
providing a first measurement signal based on a first reflection of the first illumination signal on the surface region (24), and providing a second measurement signal based on a second reflection of the second illumination signal on the surface region (24);
evaluating the first measurement signal and the second measurement signal by combining them with each other so as to obtain a combination result (32) from which a position of the first illumination signal on the surface region (24) may be derived, wherein an influence of a reflectance of the surface region (24) within the combination result (32) is reduced as compared to the influence on the first and second measurement signals (28b);
forming a first logarithmized value on the basis of the first measurement signal (28a) and forming a second logarithmized value on the basis of the second measurement signal (28b), so that in the first logarithmized value and in the second logarithmized value, the influence of the reflectance is an addend, so that by subtracting the second logarithmized value from the first logarithmized value in order to obtain the combination result (32), the influence of the reflectance will be reduced;
wherein the first illumination signal (18) and the second illumination signal (22) have an identical wavelength range and are equally influenced by the reflectance or reflectivity of the surface region (24) at an identical point in the surface region (24).

15. Computer program having a program code for performing the method as claimed in claim 14 when the computer program runs on a device as claimed in claim 1.

**Revendications**

1. Dispositif avec:

un moyen d'éclairage (12) qui est conçu pour émettre un premier signal d'éclairage (18) avec une première intensité d'éclairage ($E_1$) et un deuxième signal d'éclairage (22) avec une deuxième intensité d'éclairage ($E_2$) en direction d'une zone de surface (24) d'un objet à mesurer (26), la deuxième intensité d'éclairage ($E_2$) étant inférieure à la première intensité d'éclairage ($E_1$);
un moyen de détection (14) qui est conçu pour mettre à disposition un premier signal de mesure (28a) sur base d'une première réflexion (18') du premier signal d'éclairage (18) sur la zone de surface (24) et pour mettre à disposition un deuxième signal de mesure (28b) sur base d'une deuxième réflexion (22') du deuxième signal d'éclairage (22) sur la zone de surface (24);
un moyen d'évaluation (16) qui est conçu pour combiner le premier signal de mesure (28a) et le deuxième signal de mesure (28b) l'un avec l'autre pour obtenir un résultat de combinaison (32) duquel peut être dérivée une position ($x_0/y_0$) du premier signal d'éclairage (18) sur la zone de surface (24), où une influence d'une réflectance (R) de la zone de surface (24) sur le résultat de combinaison (32) est réduite en comparaison avec l'influence sur le premier et le deuxième signal de mesure (28a, 28b);
dans lequel le moyen d'évaluation (16) est conçu pour former, sur base du premier signal de mesure (28a), une première valeur logarithmique et pour former, sur base du deuxième signal de mesure (28b), une deuxième valeur logarithmique, dans lequel, dans la première valeur logarithmique et dans la deuxième valeur logarithmique, l'influence de la réflectance est un terme de somme, de sorte qu'en soustrayant la deuxième valeur logarithmique de la première valeur logarithmique pour obtenir le résultat de combinaison (32), l'influence de la réflectance est réduite;
dans lequel le premier signal d'éclairage (18) et le deuxième signal d'éclairage (22) présentent une même plage de longueurs d'onde, de sorte que les deux signaux soient, à un même point dans la zone de surface (24), influencés dans la même mesure par la réflectance ou la réflectivité de la zone de surface (24).

2. Dispositif selon la revendication 1, dans lequel le moyen d'évaluation (16) est configuré pour déterminer, sur base du résultat de combinaison (32), la position (xo/yo) du premier signal d'éclairage (18) sur la zone de surface (24).

3. Dispositif selon la revendication 1 ou 2, dans lequel le moyen d'éclairage (12) comporte au moins un projecteur linéaire (48) destiné à émettre le premier signal d'éclairage (18) et le deuxième signal d'éclairage (22); ou dans lequel le moyen d'éclairage (12) comporte un projecteur linéaire qui est conçu pour émettre le premier signal d'éclairage (18), et présente une source de lumière qui est conçue pour éclairer la zone de surface (24) dans une zone d'éclairage de manière sensiblement homogène, dans lequel la zone d'éclairage est disposée de sorte que le premier signal d'éclairage (18) vient au moins par zones en chevauchement avec la zone d'éclairage.

4. Dispositif selon l'une des revendications précédentes, dans lequel le moyen d'éclairage (12) est conçu pour ne pas transmettre temporairement le deuxième signal d'éclairage (22) au moment où est transmis le premier signal d'éclairage (18).

5. Dispositif selon l'une des revendications précédentes, dans lequel le dispositif est conçu de sorte que, dans un premier intervalle de mesure,
le moyen d'éclairage (12) soit conçu pour émettre le premier signal d'éclairage (18), et le moyen de détection (14) soit conçu pour détecter une première prise de vue de la zone de surface (24);
et, dans un deuxième intervalle de mesure, le moyen d'éclairage (12) soit conçu pour émettre le deuxième signal d'éclairage (22), et le moyen de détection (14) soit conçu pour détecter une deuxième prise de vue de la zone de surface (24);
dans lequel le dispositif présente un actionneur qui est conçu pour maintenir, entre le premier intervalle de mesure et le deuxième intervalle de mesure, une position relative sensiblement inchangée entre le moyen d'éclairage (12), le moyen de détection (14) et la zone de surface (24).

6. Dispositif selon la revendication 5, dans lequel le moyen de détection (14) présente un capteur d'images qui présente, pour la détection d'un pixel de la première et de la deuxième prise de vue de la zone de surface (24), une première cellule de mémoire et une deuxième cellule de mémoire associée au pixel, dans lequel la première cellule de mémoire est configurée pour mémoriser une information de lumière relative à la première prise de vue et dans lequel la deuxième cellule de mémoire est configurée pour mémoriser une information de lumière relative à la deuxième prise de vue, ou

dans lequel le capteur d'images présente, pour la détection d'un pixel de la première et de la deuxième prise de vue de la zone de surface (24), une première cellule de mémoire associée à un premier pixel et une deuxième cellule de mémoire associée à un deuxième pixel, dans lequel la première cellule de mémoire est configurée pour mémoriser une information de lumière relative à la première prise de vue et dans lequel la deuxième cellule de mémoire est configurée pour mémoriser une information de lumière relative à la deuxième prise de vue et dans lequel la première et la deuxième cellule de mémoire sont couplées électriquement ou optiquement l'une à l'autre de sorte que les signaux d'image enregistrés dans la première et la deuxième cellule de mémoire soient identiques.

**7.** Dispositif selon l'une des revendications précédentes, dans lequel le moyen d'évaluation (16) présente un filtre qui est conçu pour soumettre le premier signal de mesure (28a) ou le deuxième signal de mesure (28b) à une opération de filtration ou pour soumettre le résultat de combinaison (32) à une opération de filtration, et pour dériver du résultat de filtration la position du premier signal d'éclairage sur la zone de surface.

**8.** Dispositif selon la revendication 7, dans lequel l'opération de filtration présente une convolution du premier signal de mesure (28a) et/ou du deuxième signal de mesure (28b) ou une convolution du résultat de combinaison (32) avec un noyau de convolution ou noyau de filtre mettant en oeuvre une progression fonctionnelle.

**9.** Dispositif selon la revendication 8, dans lequel le noyau de convolution est formée de manière asymétrique par rapport à la perpendiculaire centrale dans la direction y.

**10.** Dispositif selon l'une des revendications 7 à 9, dans lequel le moyen d'évaluation (16) est conçu pour obtenir, sur base de l'opération de filtration, un résultat de filtration, et pour déterminer, à partir du résultat de filtration, la position $(x_0/y_0)$ du premier signal d'éclairage (18) sur la zone de surface (24).

**11.** Dispositif selon la revendication 10, dans lequel le moyen d'évaluation (16) est conçu pour comparer le résultat de filtration avec une valeur de seuil ($E_1'$) pour dériver la position $(x_0/y_0)$ de la projection du premier signal d'éclairage (18) sur la surface de l'objet de mesure (26).

**12.** Dispositif selon l'une des revendications 7 à 11, dans lequel le premier signal d'éclairage (18) comporte un modèle de rangées qui s'étend dans une direction de rangées (y) sur la zone de surface (24), et dans lequel le moyen d'évaluation (16) est conçu pour détecter la position de la réflexion sur la zone de surface (24) dans une direction de colonnes (x) qui est disposée de manière perpendiculaire à la direction de rangées (y), pour une pluralité de colonnes décalées latéralement,
dans lequel le moyen d'évaluation (16) présente une pluralité de noyaux de filtre qui sont conçus pour soumettre le premier signal de mesure (28a) ou le deuxième signal de mesure (28b) ou pour soumettre le résultat de combinaison (32) à une opération de filtration;
dans lequel les noyaux de filtre sont disposés décalés latéralement l'un de l'autre dans la direction de colonnes.

**13.** Dispositif selon la revendication 12, dans lequel les noyaux de filtre présentent un décalage ($\Delta x$) l'un par rapport à l'autre qui est inférieur à une distance entre deux colonnes adjacentes.

**14.** Procédé aux étapes suivantes consistant à:

émettre un premier signal d'éclairage (18) avec une première intensité d'éclairage ($E_1$) et un deuxième signal d'éclairage (22) avec une deuxième intensité d'éclairage ($E_2$) en direction d'une zone de surface (24) d'un objet à mesurer (26), où la deuxième intensité d'éclairage ($E_2$) est inférieure à la première intensité d'éclairage ($E_1$);
mettre à disposition un premier signal de mesure sur base d'une première réflexion du premier signal d'éclairage sur la zone de surface (24), et mettre à disposition un deuxième signal de mesure sur base d'une deuxième réflexion du deuxième signal d'éclairage sur la zone de surface (24);
évaluer le premier signal de mesure et le deuxième signal de mesure en combinant ces derniers pour obtenir un résultat de combinaison (32) à partir duquel peut être dérivée une position du premier signal d'éclairage sur la zone de surface (24), où une influence d'une réflectance de la zone de surface (24) dans le résultat de combinaison (32) est réduite en comparaison avec l'influence sur le premier et le deuxième signal de mesure (28b);
former une première valeur logarithmique sur base du premier signal de mesure (28a) et former une deuxième valeur logarithmique sur base du deuxième signal de mesure (28b) de sorte que, dans la première valeur logarithmique et dans la deuxième valeur logarithmique, l'influence de la réflectance soit un terme de somme de sorte que, en soustrayant la deuxième valeur logarithmique de la première valeur logarithmique pour obtenir le résultat de combinaison (32), l'influence de la réflectance soit réduite;
dans lequel le premier signal d'éclairage (18) et le deuxième signal d'éclairage (22) présentent une même plage de longueurs d'onde et sont influencés, à un même point dans la zone de surface (24), dans la même mesure par la réflectance ou la réflectivité de la zone de surface (24).

15. Programme d'ordinateur avec un code de programme pour réaliser le procédé selon la revendication 14 lorsque le programme d'ordinateur est exécuté sur un dispositif selon la revendication 1.

Fig. 1

Fig. 2

Fig. 3a

Fig. 3b

Fig. 3c

Fig. 4

$$A_{pos} > A_{neg}$$

Fig. 5a

28a

E

x

Fig. 5b

x

x

42a    42b    42c    42d

Fig. 5c

Fig. 6

Fig. 7

Fig. 8a

Fig. 8b

EP 3 433 577 B1

Fig. 9a

Fig. 9b

EP 3 433 577 B1

Fig. 10a

Fig. 10b

Fig. 10c

Fig. 11a

Fig. 11b

Fig. 11c

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015015898 A1
- WO 2015184308 A1
- US 20110062314 A
- JP 20090550293 T
- KR 101222942 B1